(19) Europäisches Patentamt / European Patent Office / Office européen des brevets

(11) **EP 3 395 778 A1**

(12) **EUROPEAN PATENT APPLICATION**
published in accordance with Art. 153(4) EPC

(43) Date of publication:
**31.10.2018 Bulletin 2018/44**

(51) Int Cl.:
*C03C 27/12* (2006.01)   *B60J 1/00* (2006.01)

(21) Application number: **16878671.3**

(22) Date of filing: **20.12.2016**

(86) International application number:
**PCT/JP2016/087893**

(87) International publication number:
**WO 2017/110782 (29.06.2017 Gazette 2017/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.12.2015 JP 2015254626**

(71) Applicant: **Nippon Sheet Glass Company, Limited Tokyo 108-6321 (JP)**

(72) Inventors:
• **YANO, Yota**
  **Tokyo 108-6321 (JP)**
• **YOSHIZAKI, Akira**
  **Tokyo 108-6321 (JP)**
• **KAWAHARA,Yuki**
  **Tokyo 108-6321 (JP)**

(74) Representative: **Webster, Jeremy Mark et al Mewburn Ellis LLP City Tower 40 Basinghall Street London EC2V 5DE (GB)**

(54) **LAMINATED GLASS**

(57)   A laminated glass according to an aspect of the present invention includes: an outer glass plate that includes a first surface and a second surface and that curves such that the first surface is convex and the second surface is concave; an inner glass plate that includes a third surface and a fourth surface and that curves such that the third surface is convex and the fourth surface is concave; an interlayer that is arranged between the outer glass plate and the inner glass plate and bonds the second surface of the outer glass plate and the third surface of the inner glass plate together; and a blocking layer that is made of ceramic and is layered along a peripheral edge portion of at least one of the second surface, the third surface, and the fourth surface. The ceramic is configured such that the maximum value of reflectivity with respect to light in a wavelength range of 1000 nm to 2500 nm is 15% or more.

FIG.3

**Description**

Technical Field

The present invention relates to a laminated glass.

Background Art

For example, Patent Literature 1 proposes a laminated glass that is obtained by bonding an outer glass plate having a convex first surface and a concave second surface and an inner glass plate having a convex third surface and a concave fourth surface together via an interlayer. With this kind of laminated glass, in general, a blocking layer made of ceramic is formed along the peripheral edge portion of the fourth surface of the inner glass plate.

Citation List

Patent Literature

Patent Literature 1: JP 2015-024929A

Summary of Invention

Technical Problem

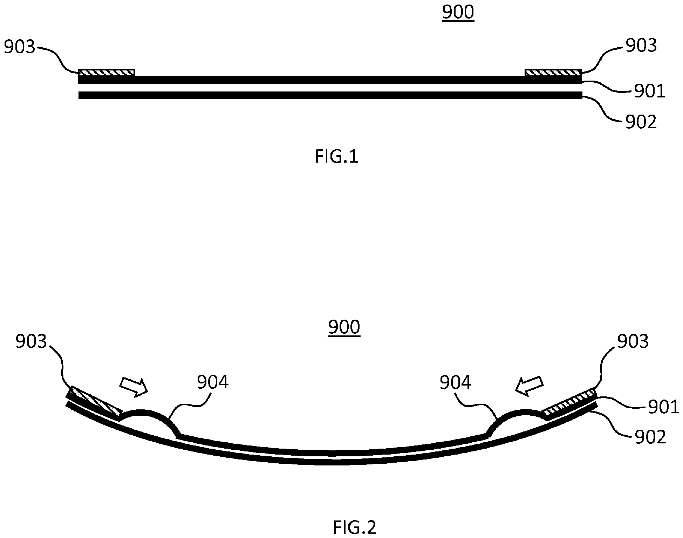

The inventors of the present document found that the following issues occur when a laminated glass is formed with a curve upon forming a blocking layer made of ceramic along the peripheral edge portion of a glass plate. Hereinafter, the problems found by the inventors of the present document will be described with reference to FIGS. 1 and 2.

FIG. 1 schematically illustrates a state of a laminated glass 900 prior to molding. FIG. 2 schematically illustrates a state of the laminated glass 900 during heated molding. As illustrated in FIGS. 1 and 2, the laminated glass 900 includes an inner glass plate 901 arranged on an inner side and an outer glass plate 902 arranged on an outer side.

First, as shown in FIG. 1, in order to form a blocking layer 903, before the laminated glass 900 is formed into a curve, ceramic of a dark color such as black is layered on (applied to) the peripheral edge portion of the surface that is to be made concave through the molding, of the flat plate-shaped inner glass plate 901. The layered ceramic is heated and fired along with the laminated glass 900 when the laminated glass 900 is subjected to bending using a gravity bending method, a pressing method, or the like. Accordingly, the blocking layer 903 is formed in the region to which the ceramic is applied.

Here, the ceramic that forms the blocking layer 903 generally has a heat absorptivity that is higher than that of the glass plates (901 and 902). For this reason, while the laminated glass 900 is being heated in order to perform bending, the ceramic reaches a higher temperature than the glass plates (901 and 902), whereby the region of the laminated glass 900 on which the ceramic is layered is heated to a temperature that is greater than or equal to a design value. Accordingly, the viscosity of the glass at the region on which the ceramic is layered becomes small, and the region on which the ceramic is layered (region in which the blocking layer 901 is formed) is likely to deform.

Also, in general, the expansion coefficient of the ceramic that forms the blocking layer 903 is different from the expansion coefficient of the glass plates (901 and 902), and the amounts of expansion and contraction are different for the blocking layer 903 and the glass plates (901 and 902). For example, if the ceramic constituting the blocking layer 903 has a higher thermal expansion rate than the glass plates (901 and 902), during the heating for bending, the blocking layer 903 will expand more than the glass plates (901 and 902).

That is, during the heating for bending, a partial region of the inner glass plate 901 on which the ceramic is layered becomes likely to deform due to the influence of the blocking layer 901, and the blocking layer 903 attempts to expand in the in-plane direction with respect to the inner glass plate 901. As a result, as illustrated in FIG. 2, the region of the inner glass plate 901 that is near the blocking layer 903 warps due to receiving stress in the directions of the arrows caused by the relative expansion of the blocking layer 903, and a convex deformed portion 904 is formed. Such distortion occurs prominently when the laminated glass 900 is molded through so-called gravity bending.

On the other hand, since the outer glass plate 902 is not provided with the blocking layer 903, the above-described convex deformed portion 904 is not formed thereon. For this reason, with the laminated glass 900 obtained by overlapping the inner glass plate 901 and the outer glass plate 902, at the portions at which the convex deformed portions 904 are formed, the parallelism of the two glass plates (901 and 902) cannot be guaranteed and significant optical distortion occurs. In other words, scenery viewed through the portion at which the convex deformation is formed will significantly distort. A similar phenomenon occurs also in the case where the blocking layer is not provided on the inner glass plate 901 but the blocking layer is provided on the outer glass plate 902.

Also, an interlayer (not shown) that is interposed between and compressed by the two glass plates (901 and 902) gathers so as to fill the gap at the convex deformed portion 904. For this reason, the thickness of the interlayer increases at the deformed portion 904, and thus the deformed portion 904 acts as a convex lens. Upon doing so, scenery viewed through the deformed portion 904 warps significantly due to the effect of the convex lens. For these reasons, the inventors of the present document found that a problem such as significant optical distortion occurring near the blocking layer occurs when the blocking layer made of ceramic is formed along the peripheral edge portion of the glass plate.

One aspect of the present invention has been made in view of such a problem and it is an object thereof to provide a technique for reducing optical distortion that occurs near a blocking layer.

Solution to Problem

The present invention employs the following configuration in order to solve the above-described problem.

In other words, a laminated glass according to an aspect of the present invention includes: an outer glass plate that includes a first surface and a second surface and that curves such that the first surface is convex and the second surface is concave; an inner glass plate that includes a third surface and a fourth surface and that curves such that the third surface is convex and the fourth surface is concave; an interlayer that is arranged between the outer glass plate and the inner glass plate and bonds the second surface of the outer glass plate and the third surface of the inner glass plate together; and a blocking layer that is made of ceramic and is layered along a peripheral edge portion of at least one of the second surface, the third surface, and the fourth surface, wherein the ceramic is configured such that the maximum value of reflectivity with respect to light in a wavelength range of 1000 nm to 2500 nm is 15% or more.

With the laminated glass having this configuration, the outer glass plate including the convex first surface and the concave second surface, and the inner glass plate including the convex third surface and the concave fourth surface are bonded by the interlayer. Accordingly, the blocking layer made of ceramic is formed along the peripheral edge portion of at least one of the second surface, the third surface, and the fourth surface.

Incidentally, in general, when such a glass plate is to be subjected to bending, the temperature of the interior of a heating furnace (furnace interior) that is to heat the glass plate is set to about 1000 K (Kelvins) . For this reason, based on Planck's law, it is inferred that a large amount of light with a wavelength of about 2500 nm (infrared light) is emitted in the furnace interior. Also, light with a wavelength in the infrared light region of 1000 nm or more has an effect of heating a substance. For this reason, in the furnace interior of the heating furnace, it is inferred that light with a wavelength of 1000 nm to 2500 nm has a strong influence and the ceramic forming the blocking layer will be heated by light with such a wavelength.

In view of this, the laminated glass according to an aspect of the present invention uses ceramic that is configured such that the maximum value of reflectivity with respect to light in the wavelength range of 1000 nm to 2500 nm is 15% or more, as the ceramic forming the blocking layer. Accordingly, it is possible to make it difficult for the ceramic forming the blocking layer to absorb the light (infrared light) that is emitted in a large amount in the furnace interior.

In other words, by suppressing the amount of infrared light absorbed by the ceramic, it is possible to prevent the ceramic from reaching a high temperature, or in other words, to prevent the region on which the ceramic is layered from becoming likely to be heated to a set value or more when the glass plate is subjected to bending. For this reason, with the above-described configuration, it is possible to prevent the region on which the ceramic is layered from bending significantly, and thus it is possible to reduce the occurrence of deformation near the blocking layer.

Accordingly, with the above-described configuration, it is possible to reduce the occurrence of the above-described deformation near the blocking layer, and therefore it is possible to suppress a case in which a region that exhibits a lens effect is generated due to a change in the thickness of the interlayer near the blocking layer. Accordingly, with this configuration, it is possible to reduce optical distortion that occurs near the blocking layer. Note that "optical distortion" refers to a phenomenon in which scenery viewed through glass distorts.

Also, in another embodiment of the laminated glass having the above-described configuration, the ceramic may be configured to have a reflectivity of 35% or more with respect to light with a wavelength of 2500 nm. With this embodiment, when the glass plate is subjected to bending, the amount of infrared light absorbed by the ceramic forming the blocking layer can be further suppressed, and therefore it is possible to suitably reduce optical distortion that occurs near the blocking layer.

Also, in another embodiment of the laminated glass having the above-described configuration, the ceramic may contain an infrared light reflecting pigment in which the maximum value of reflectivity with respect to light in the wavelength range of 1000 nm to 2500 nm is 60% or more. With this embodiment, when the glass plate is subjected to bending, the amount of infrared light absorbed by the ceramic forming the blocking layer can be further suppressed, and therefore it is possible to suitably reduce optical distortion that occurs near the blocking layer.

Also, in another embodiment of the laminated glass having the above-described configurations, the blocking layer may include an image capture window corresponding to an image capture apparatus such that the image capture apparatus can perform image capture through the laminated glass, and the image capture window may be formed in a hole shape or a cut-out shape. "Hole shape" indicates a state in which the periphery of the image capture window is completely surrounded by the ceramic forming the blocking layer, and "cut-out shape" indicates a state in which the periphery of the image capture window is surrounded by the ceramic forming the blocking layer but the periphery of the image capture window is partially open. In other words, if the image capture window is formed in a hole shape or a cut-out shape in the blocking layer, both end sides of the image capture window are sandwiched by the ceramic in a certain direction. Upon doing so, since the image capture window is a relatively small region, there is a possibility that a significant deformation that impairs image capture performed by the image capture apparatus will occur in the image capture window due to the two end sides being influenced by the deformation caused by the ceramic. In particular, in an image capture window that is a relatively small region and has two end sides that are influenced by the ceramic, this kind of deformation is likely to occur more prominently than in the periphery of the above-described blocking layer 903 shown in FIGS. 1 and 2. By contrast, with the above-described embodiment, for the above-described reasons, it is possible to suppress deformation caused by this kind of ceramic. For this reason, it is possible to provide laminated glass that includes an image capture window that does not impair image capture performed by an image capturing apparatus, or in other words, that is suitable for image capture.

Also, in another embodiment of the laminated glass having the above-described configuration, the blocking layer may include a plurality of the image capture windows corresponding to a plurality of the image capture apparatus of a stereo camera, such that the plurality of image capture apparatuses can perform image capture through the laminated glass. With this embodiment, due to the above-described reasons, it is possible to reduce optical distortion that occurs at the peripheral edge portions of the image capture windows. For this reason, it is possible to provide laminated glass that includes image capture windows that are suitable for image capture performed by a stereo camera.

Also, in another embodiment of the laminated glass having the above-described configurations, the outer glass plate and the inner glass plate may be manufactured through gravity bending. With the gravity bending method, bending is performed using the weight of the glass, and therefore deformation caused by the blocking layer reaching a high temperature during heating for molding is likely to occur. For this reason, with the gravity bending method, deformation is likely to occur near the blocking layer, and thus significant optical distortion is likely to occur. By contrast, with the above-described embodiment, for the above-described reasons, it is possible to suppress this kind of deformation near the blocking layer and it is possible to reduce optical distortion that occurs near the blocking layer. For this reason, it is possible to provide a laminated glass that is manufactured through gravity bending and in which optical distortion that occurs near the blocking layer is reduced. In other words, reducing optical distortion that occurs near the blocking layer with the present invention exhibits a very advantageous effect in the case of molding laminated glass with the gravity bending method.

Also, the laminated glass having the above-described configurations may be used as a windshield for a vehicle, the attachment angle being 30 degrees or less with respect to a horizontal direction. With this configuration, since the attachment angle of the laminated glass is 30 degrees or less with respect to the horizontal direction, the blocking layer formed on the glass plate is more likely to enter the field of vision of the driver. For this reason, when significant optical distortion occurs near the blocking layer, there is a possibility that the field of vision of the driver will constantly be hindered by the optical distortion. Also, if the attachment angle with respect to the horizontal direction is relatively small, the length of the optical path by which the light that is incident from the front passes through the laminated glass becomes longer, and therefore the distortion amount of the optical distortion becomes larger. By contrast, with the above-described embodiment, for the above-described reasons, it is possible to reduce optical distortion that occurs near the blocking layer. Accordingly, even if the blocking layer enters the field of vision of the driver due to the condition that the attachment angle with respect to the horizontal direction is 30 degrees or less, the driver can comfortably view scenery outside of the vehicle up to the vicinity of the blocking layer. In other words, reducing optical distortion that occurs near the blocking layer with the present invention exhibits a very advantageous effect with respect to the attachment condition of the laminated glass, which is that the attachment angle with respect to the horizontal direction is 30 degrees or less.

Also, in another embodiment of the laminated glass having the above-described configurations, the outer glass plate and the inner glass plate may be transparent, and the ceramic forming the blocking layer may have a different absorptivity for light in the wavelength range of 1000 nm to 2500 nm than the outer glass plate and the inner glass plate. With this configuration, both glass plates are transparent and the ceramic of the blocking layer and the two glass plates have different absorptivities for light in the wavelength region of 1000 nm to 2500 nm. For this reason, during bending, a temperature difference is likely to occur between the ceramic of the blocking layer and the two glass plates, deformation is likely to occur near the blocking layer, and thus significant optical distortion is likely to occur. By contrast, with the above-described embodiment, for the above-described reasons, it is possible to suppress this kind of deformation near the blocking layer and it is possible to reduce optical distortion that occurs near the blocking layer. For this reason, it is possible to provide a laminated glass in which two glass plates are transparent and the ceramic of the blocking layer and the two glass plates have different absorptivities for light in the wavelength range of 1000 nm to 2500 nm, the laminated glass having reduced optical distortion that occurs near the blocking layer. In other words, reducing optical distortion that occurs near the blocking layer with the present invention exhibits a very advantageous effect in the case where transparent glass plates and ceramic that has a different absorptivity for light in the above-described wavelength range than the glass plates are employed as materials for the laminated glass.

Also, in another embodiment of the laminated glass having the configurations, the blocking layer may be layered only on one of the second surface and the fourth surface. With this configuration, the blocking layer is layered only on one of the second surface and the fourth surface, and therefore deformation is likely to occur in only the one glass plate on which the blocking layer is layered, and thus the deformed portion that causes significant optical distortion is likely to be formed near the blocking layer. By contrast, with this embodiment, for the above-described reasons, it is possible to suppress this kind of deformation near the blocking layer and it is possible to reduce optical distortion that occurs near the blocking layer. For this reason, it is possible to provide a laminated glass in which the blocking layer is layered only on one of the second surface and the fourth surface, the laminated glass having reduced optical distortion that occurs near the blocking layer. In other words, reducing optical distortion that occurs near the blocking layer with the present invention exhibits a very advantageous effect in the case of layering the blocking layer only on one of the second surface and the fourth surface.

Also, in another embodiment of the laminated glass having the above-described configuration, a deformed portion that refracts light that passes through the outer glass plate and the inner glass plate may be formed near the blocking layer, and the refractive power of the deformed portion may be 160 mdpt or less. With this embodiment, it is possible to provide a laminated glass in which optical distortion that occurs near the blocking layer is reduced by preventing a deformed portion with a refractive power exceeding 160 mdpt from being present near the blocking layer. Note that the refractive power of the glass plate can change according to the attachment angle of the glass plates. The refractive power of the deformed portion may be 160 mdpt or less in a state in which the laminated glass is tilted 27 degrees with respect to the horizontal direction.

Advantageous Effects of the Invention

According to the present invention, it is possible to provide a technique for reducing optical distortion that occurs near a blocking layer.

Brief Description of Drawings

FIG. 1 schematically illustrates a state of glass plates prior to molding.
FIG. 2 schematically illustrates a state of glass plates during heated molding.
FIG. 3 is a front view schematically illustrating a laminated glass according to an embodiment.
FIG. 4 is a cross-sectional view schematically illustrating the laminated glass according to the embodiment.
FIG. 5 is a diagram for illustrating optical distortion.
FIG. 6 schematically illustrates a step of manufacturing a glass plate according to the embodiment.
FIG. 7 schematically illustrates a shape of a vicinity of a blocking layer of the laminated glass according to the embodiment.
FIG. 8 is a diagram for illustrating deformation that occurs in an image capture window.
FIG. 9 is a diagram for illustrating deformation that occurs in the image capture window.
FIG. 10 shows a result of measuring, with a depth gauge, a first surface and a third surface of a laminated glass according to a comparative example in which a blocking layer is provided on a fourth surface.
FIG. 11 shows a result of measuring total thickness of the laminated glass according to the comparative example in which the blocking layer is provided on the fourth surface.
FIG. 12 is a graph showing reflectivity of ceramics used in working examples and the comparative example.
FIG. 13 is a diagram for illustrating conditions for observing optical distortion.
FIG. 14 is a diagram for illustrating a method for calculating a distortion rate.
FIG. 15 is a photograph showing optical distortion of a laminated glass according to a working example.
FIG. 16 is a photograph showing optical distortion of a laminated glass according to a working example.
FIG. 17 is a photograph showing optical distortion of a laminated glass according to a working example.
FIG. 18 is a photograph showing optical distortion of a laminated glass according to a working example.
FIG. 19 is a photograph showing optical distortion of a laminated glass according to the comparative example.
FIG. 20 is a diagram for illustrating a lens effect that occurs at a deformed portion.
FIG. 21 is a diagram for illustrating a lens effect that occurs at a deformed portion.
FIG. 22 is a diagram for illustrating a relationship between a lens effect and magnification under the observation conditions in FIG. 13.
FIG. 23 is a graph showing a relationship between a lens effect and magnification under the conditions in FIG. 22.
FIG. 24 is a graph showing a relationship between a distortion rate and a lens effect.

Description of Embodiments

Hereinafter, an embodiment (hereinafter denoted also as "the present embodiment") according to an aspect of the present invention will be described with reference to the drawings. Note that the present embodiment described below is in all respects merely an example of the present invention. It goes without saying that various improvements and modifications can be performed without departing from the scope of the present invention. In other words, in the implementation of the present invention, the specific configuration corresponding to the embodiment may be employed as appropriate.

§1 Configuration example

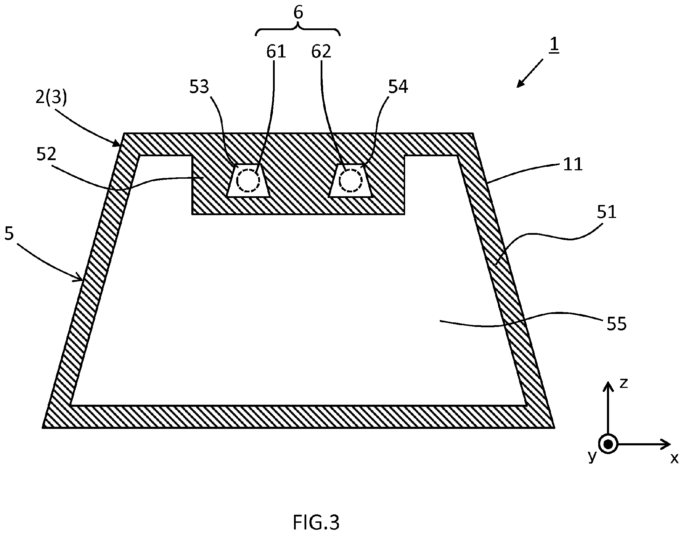

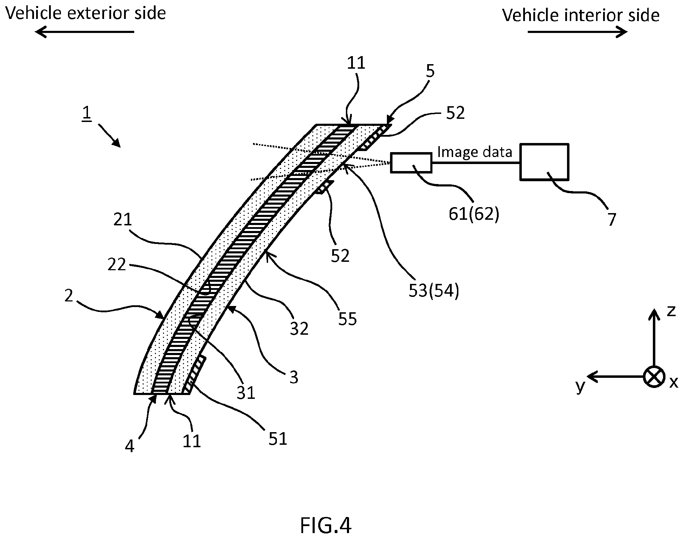

First, a laminated glass 1 according to the present embodiment will be described with reference to FIGS. 3 and 4. FIG. 3 is a front view schematically illustrating the laminated glass 1 according to the present embodiment. Also, FIG. 4 is a cross-sectional view schematically illustrating the laminated glass 1 according to the present embodiment.

Note that in FIGS. 3 and 4, for the sake of convenience in the description, directions are illustrated using an x axis, a y axis, and a z axis. Here, the z axis direction corresponds to the direction orthogonal to the ground, and a positive orientation on the z axis corresponds to a vertically upward orientation. Also, the xy plane corresponds to a plane that is horizontal with respect to the ground, and the x axis direction and y axis direction correspond to directions that are horizontal with respect to the ground. Hereinafter, the positive direction and the negative direction on the z axis are called "up" and "down" respectively, the positive direction and the negative direction on the x axis are called "right" and "left" respectively, and the positive direction and the negative direction on the y axis are called "front" and "rear" respectively.

The laminated glass 1 according to the present embodiment is used as a windshield for a vehicle and is attached to an automobile at an incline from the vertical direction. Specifically, as illustrated in FIGS. 3 and 4, the laminated glass 1 according to the present embodiment includes an outer glass plate 2 arranged on the vehicle exterior side and an inner glass plate 3 arranged on the vehicle interior side.

As illustrated in FIG. 4, the outer glass plate 2 includes a first surface 21 on the vehicle exterior side and a second surface 22 on the vehicle interior side, and the outer glass plate 2 curves in a direction perpendicular to the surface (y axis direction in the drawing) such that the first surface 21 is convex and the second surface 22 is concave. Similarly, the inner glass plate 3 includes a third surface 31 on the vehicle exterior side and a fourth surface 32 on the vehicle interior side, and curves in the direction perpendicular to the surface (y axis direction in the drawing) such that the third surface 31 is convex and the fourth surface 32 is concave.

An interlayer 4 made of resin is arranged between the outer glass plate 2 and the inner glass plate 3 and the interlayer 4 bonds the second surface 22 of the outer glass plate 2 and the third surface 31 of the inner glass plate 3 together. Also, a blocking layer 5 that blocks a field of vision originating from the vehicle exterior is provided along a peripheral edge portion 11 of the laminated glass 1, or more specifically, the peripheral edge portion of the fourth surface 32 of the inner glass plate 3.

Furthermore, a stereo camera 6 is attached in the vehicle interior of the automobile to which the laminated glass 1 is attached, via a bracket (not shown) and the like, so as to be blocked by the blocking layer 5 and not be visible from the vehicle exterior. The stereo camera 6 includes two image capturing apparatuses (61 and 62) that are located apart from each other, such that two images with parallax can be acquired simultaneously.

Also, as illustrated in FIG. 3, the blocking layer 5 includes two image capture windows (53 and 54) corresponding to the image capturing apparatuses (51 and 52) such that the image capturing apparatuses (61 and 62) arranged in the vehicle interior can capture an image of a state of the vehicle exterior through the laminated glass 1. Accordingly, the laminated glass 1 according to the present embodiment is configured to be able to be used as a windshield for an automobile including the stereo camera 6. Hereinafter, constituent elements will be described.

Outer glass plate and inner glass plate

First, the outer glass plate 2 and the inner glass plate 3 will be described. The outer glass plate 2 and the inner glass plate 3 are both transparent. Known glass plates can be used as the outer glass plate 2 and the inner glass plate 3. For example, the outer glass plate 2 and the inner glass plate 3 may be heat-ray absorbing glass, clear glass, green glass, UV cutting green glass, or the like.

However, the outer glass plate 2 and the inner glass plate 3 are configured to realize a visible light transmittance that conforms to a safety standard of a country in which the automobile is to be used. For example, a desired sunlight absorptivity can be ensured by the outer glass plate 2 and adjustment can be performed by the inner glass plate 3 such that the visible light absorptivity satisfies the safety standard. Hereinafter, an example of a composition of a clear glass and an example of a heat-ray absorbing glass composition will be given as examples of compositions of glass that can constitute the outer glass plate 2 and the inner glass plate 3.

Clear glass

$SiO_2$: 70 to 73 mass%
$Al_2O_3$: 0.6 to 2.4 mass%
CaO: 7 to 12 mass%
MgO: 1.0 to 4.5 mass%
$R_2O$: 13 to 15 mass% (R is an alkali metal)
Total iron oxide ($T$-$Fe_2O_3$) in terms of $Fe_2O_3$: 0.08 to 0.14 mass%

Heat-ray absorbing glass

With regard to the composition of the heat-ray absorbing glass, a composition obtained based on the composition of clear glass by setting the ratio of total iron oxide ($T$-$Fe_2O_3$) in terms of $Fe_2O_3$ to 0.4 to 1.3 mass%, the ratio of $CeO_2$ to 0 to 2 mass%, and the ratio of $TiO_2$ to 0 to 0.5 mass% and reducing the components (mainly $SiO_2$ and $Al_2O_3$) forming the framework of the glass by an amount corresponding to the increases in $T$-$Fe_2O_3$, $CeO_2$, and $TiO_2$ can be used, for example.

The thickness of the laminated glass 1 according to the present embodiment is not particularly limited, but from the viewpoint of reducing the weight, the sum of the thicknesses of the outer glass plate 2 and the inner glass plate 3 is preferably 2.4 to 5.4 mm, more preferably 2.6 to 4.8 mm, and particularly preferably 2.7 to 3.2 mm. In this manner, in order to reduce the weight, it is sufficient to reduce the total thickness of the outer glass plate 2 and the inner glass plate 3. The thicknesses of the outer glass plate 2 and the inner glass plate 3 are not particularly limited, but for example, the thicknesses of the outer glass plate 2 and the inner glass plate 3 can be determined as follows.

In other words, the outer glass plate 2 mainly requires durability and impact resistance against impacts of flying objects such as small stones and the like. On the other hand, the weight increases as the thickness of the outer glass plate 2 increases, which is not preferable. From this viewpoint, the thickness of the outer glass plate 2 is preferably 1.8 to 3.0 mm, and more preferably 1.9 to 2.1 mm. It is possible to determine which thickness to employ as appropriate according to the embodiment.

Also, the thickness of the inner glass plate 3 can be made equal to the thickness of the outer glass plate 2, but for example, in order to reduce the weight of the laminated glass 1, the thickness can be made smaller than that of the outer glass plate 2. Specifically, upon considering the strength of the glass, the thickness of the inner glass plate 3 is preferably 0.6 to 2.4 mm, more preferably 0.8 to 1.6 mm, and particularly preferably 1.0 to 1.4 mm. Furthermore, the thickness of the inner glass plate 3 is preferably 0.8 to 1.3 mm. For the inner glass plate 3 as well, it is possible to determine which thickness to employ as appropriate according to the embodiment.

Note that as described above, during heating for bending the laminated glass, convex deformations occur near the blocking layer of the glass plate due to a difference between the expansion amount of the glass plate and the expansion amount of the blocking layer layered on the glass plate. For this reason, when the thickness of the glass plate on which the blocking layer is layered is reduced, the strength of the glass decreases and becomes more easily influenced by the blocking layer, and therefore deformation becomes more likely to occur near the blocking layer. In the present embodiment, the blocking layer 5 is layered on the inner glass plate 3, and therefore when the thickness of the inner glass plate 3 is made relatively smaller, the above-described deformation becomes more likely to occur near the blocking layer 5. For example, when the thickness of the inner glass plate 3 is set to be 2.5 mm or less, there is a possibility that the above-described deformation will occur near the blocking layer 5, and when the thickness of the inner glass surface 3 is set to be 2.0 mm or less, the above-described deformation becomes more likely to occur near the blocking layer 5. Also, when the thickness of the inner glass surface 3 is set to be 1.6 mm or less, the above-described deformation becomes even more likely to occur near the blocking layer 5.

Also, the likelihood of occurrence of the deformation near the blocking layer is related not only to the thickness of the glass plate on which the blocking layer is layered, but also the ratio between the thickness of the glass plate and the thickness of the blocking layer. Specifically, if " (thickness of glass plate (mm)) ÷ (thickness of blocking layer (mm))" is 150 or less, there is a possibility that the above-described deformation will occur near the blocking layer, and if it is 100 or less, the above-described deformation becomes more likely to occur near the blocking layer. In the present embodiment, the blocking layer 5 is layered on the inner glass plate 3, and therefore if the thickness of the inner glass plate 3 and the thickness of the blocking layer 5 reach this kind of ratio, there is a possibility that the above-described deformation will occur near the blocking layer. The same follows also in the case where the blocking layer 5 is layered on the outer glass plate 2. Note that in the present embodiment, it is possible to suppress a case in which such deformation occurs by using a later-described ceramic as the ceramic used as the blocking layer 5.

Also, as illustrated in FIGS. 3 and 4, in the present embodiment, the outer glass plate 2 and the inner glass plate 3 are formed into approximate trapezoids and are curved to the same extent in the direction perpendicular to the surface (y axis direction in the drawings). For example, the length in the left-right direction (x axis direction in the drawings) of the glass plates (2 and 3) may be set within a range of 500 mm to 3000 mm, and is preferably set within a range of 1000 mm to 2000 mm. Also, the length in the vertical direction (z axis direction in the drawings) of the glass plates (2 and 3) may be set within a range of 300 mm to 1500 mm, and is preferably set within a range of 500 mm to 1200 mm. Also, the depth of bend of the glass plates (2 and 3) may be 50 mm or less, and is preferably 15 mm to 30 mm. Note that "depth of bend" refers to the depth from a straight line that is drawn in the vertical direction and connects an upper edge and a lower edge of a glass plate, to the glass surface, at the center in the left-right direction of the glass plate. In other words, the larger the depth of bend is, the more the glass plate bends and the higher the temperature to which the glass plate is heated accordingly during bending (the higher the furnace interior temperature is set). For this reason, the larger the depth of bend is, the more likely the above-described deformation is to occur near the blocking layer. Note that in the present embodiment, even if the depth of bend of the glass plates (2 and 3) is set to be high, it is possible to suppress a case in which deformation occurs near the blocking layer 5 by using later-described ceramic as the ceramic used as the blocking layer 5.

Interlayer

Next, the interlayer 4 that bonds the outer glass plate 2 and the inner glass plate 3 will be described. The interlayer 4 can have various configurations according to the embodiment, and for example, can be constituted by a three-layer structure in which a soft core layer is sandwiched between a pair of outer layers harder therethan. The damage resistance performance and noise blocking performance of the laminated glass 1 can be increased by thus forming the interlayer 4 with multiple soft layers and hard layers.

Also, the material of the interlayer 4 need not be particularly limited, and may be selected as appropriate according to the embodiment. For example, if the interlayer 4 is formed with multiple layers having different hardnesses as described above, it is possible to use polyvinyl butyral resin (PVB) as the hard outer layers. The polyvinyl butyral resin (PVB) is preferable as the material for the outer layers since it has excellent adhesiveness with the outer glass plate 2 and the inner glass plate 3 and excellent penetration resistance. Also, ethylene vinyl acetate resin (EVA) or polyvinyl acetal resin that is softer than the polyvinyl butyral resin used for the outer layers can be used for the soft core layer.

Note that in general, the hardness of the polyvinyl acetal resin can be controlled using (a) the degree of polymerization of polyvinyl alcohol, which is the starting material, (b) the degree of acetalization, (c) the type of plasticizer, (d) the ratio of the plasticizer added, and the like. Accordingly, a hard polyvinyl acetal resin that is used for the outer layers and a soft polyvinyl acetal resin that is used for the core layer may be produced by appropriately adjusting at least one of the conditions of (a) to (d).

Furthermore, the hardness of the polyvinyl acetal resin can be controlled based on the type of aldehyde to be used for acetalization, and whether co-acetalization using multiple types of aldehyde or pure acetalization using a single type of aldehyde is performed. Although not necessarily applicable to every case, the larger the number of carbon atoms in the aldehyde that is used to obtain a polyvinyl acetal resin is, the softer the resulting polyvinyl acetal resin tends to be. Accordingly, for example, if the outer layers are made of a polyvinyl butyral resin, a polyvinyl acetal resin that is obtained by acetalizing an aldehyde having 5 or more carbon atoms (e.g., n-hexyl aldehyde, 2-ethylbutyl aldehyde, n-heptyl aldehyde, or n-octyl aldehyde) with polyvinyl alcohol can be used for the core layer.

Also, the total thickness of the interlayer 4 can be set as appropriate according to the embodiment, and for example, it can be 0.3 to 6.0 mm, preferably 0.5 to 4.0 mm, and more preferably 0.6 to 2.0 mm. For example, if the interlayer 4 is constituted by a three-layer structure including a core layer and a pair of outer layers that sandwich the core layer, the thickness of the core layer is preferably 0.1 to 2.0 mm, and more preferably 0.1 to 0.6 mm. On the other hand, the thickness of each outer layer is preferably larger than the thickness of the core layer, and specifically, is preferably 0.1 to 2.0 mm, and more preferably 0.1 to 1.0 mm.

Although there is no particular limitation on the method for manufacturing this kind of interlayer 4, examples thereof include a method in which a resin component such as the above-described polyvinyl acetal resin, a plasticizer, and other additives, if necessary, are mixed and uniformly kneaded, and then the layers are collectively extruded, and a method in which two or more resin films that are produced using this method are laminated with a pressing process, a lamination process, or the like. In the method of laminating with the pressing process, the lamination process, or the like, each of the resin films before laminating may have a single-layer structure or a multilayer structure. Moreover, the interlayer 4 may include a single layer instead of the multiple layers as described above.

Blocking layer

Next, the blocking layer 5 provided on the fourth surface 32 of the inner glass plate 3 will be described. As illustrated in FIGS. 3 and 4, the blocking layer 5 is made of a later-described ceramic and is layered along the peripheral edge portion of the fourth surface 32 of the inner glass plate 3. In the present embodiment, the blocking layer 5 can be divided into a peripheral edge region 51 that conforms to the peripheral edge portion, and a protruding region 52 that protrudes downward in a rectangular shape from the upper side portion of the inner glass plate 3.

The peripheral edge region 51 blocks entry of light from the peripheral edge portion 11 of the laminated glass 1. Also, the protruding region 52 makes it so that the stereo camera 6 arranged in the vehicle interior is not visible from the vehicle exterior. By contrast, the region on the inner side in the in-plane direction with respect to the blocking layer 5 is a non-blocked region 55 in which the blocking layer 5 is not formed. Passengers seated in the driver's seat and the passenger's seat in the automobile in which the laminated glass 1 is attached view the frontward vehicle exterior via the non-blocked region 55. For this reason, the non-blocked region 55 is configured to have a visible light transmissivity of such an extent that at least the traffic conditions of the vehicle exterior are visible.

Also, the protruding region 52 of the blocking layer 5 is provided with two approximately trapezoid-shaped image capture windows (53 and 54) that are arranged apart from each other on the left and right, corresponding to the positions of the image capturing apparatuses (61 and 62) of the stereo camera 6 arranged in the vehicle interior. The image capture windows (53 and 54) are regions on which a material such as the ceramic that constitutes the blocking layer 5 is not layered, and are formed into hole shapes in the protruding region 52 of the blocking layer 5. The image capture windows (53 and 54) being formed into hole shapes means a state in which the peripheries of the image capture windows (53 and 54) are completely surrounded with the ceramic that forms the blocking layer 5, as shown in FIG. 3. The image capturing apparatuses (61 and 62) of the stereo camera 6 can capture images of the state of the vehicle exterior via the image capture windows (53 and 54).

For example, the image capture windows (53 and 54) are configured such that the visible light transmissivity is 70% or more, as defined in JIS R 3211. Note that as defined in JIS R 3212 (3.11 Visible light transmissivity test), the transmissivity can be measured using a spectrometric method defined in JIS Z 8722.

Note that the dimensions of the portions of the blocking layer 5 can be set as appropriate according to the embodiment. For example, the width of the blocking layer 5 provided on the upper side portion of the inner glass plate 3 may be 50 mm, the width of the blocking layer 5 provided on the lateral side portions may be 25 mm, and the width of the blocking layer 5 provided on the lower side portion may be 130 mm. Here, when the image capture windows (53 and 54) are provided in a region outside of the blocking layer 5, in order to prevent the stereo camera 6 from being visible from the vehicle exterior, there is a possibility that the dimensions of the portions of the blocking layer 5 will become larger than necessary, and the design of the laminated glass 1 will be impaired. However, according to the present embodiment, the image capture windows (53 and 54) are provided in the region of the blocking layer 5, and therefore the dimensions of the blocking layer 5 can be made relatively smaller.

In the present embodiment, such a blocking layer 5 is made of ceramic of a dark color, such as black, brown, gray, or dark blue, for example. The range of the thermal expansion rate of the ceramic is $50 \times 10^{-7}$/K to $150 \times 10^{-7}$/K (300°C), for example. For example, dark blue ceramic has a thermal expansion rate of $120 \times 10^{-7}$/K (300°C). By contrast, the range of the thermal expansion rate of the glass plates is $80 \times 10^{-7}$/K to $120 \times 10^{-7}$/K (300°C), for example. For example, the glass plates (2 and 3) each have a thermal expansion rate of $90 \times 10^{-7}$/K (300°C). For this reason, if ceramic similar to the conventional ceramic is used, significant optical distortion occurs near the blocking layer 5 for the above-described reasons. This optical distortion occurs when the difference in thermal expansion rate between the ceramic and the glass plates is $1 \times 10^{-7}$/K (300°C) or more, and occurs prominently when the difference in thermal expansion rate between the ceramic and the glass plates is $3 \times 10^{-7}$/K (300°C) or more.

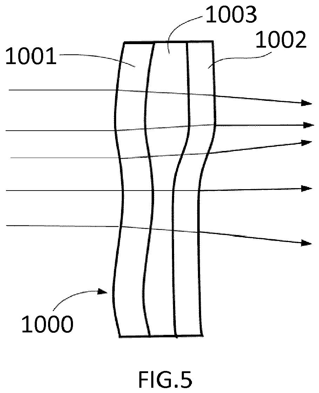

Here, optical distortion will be described with reference to FIG. 5. FIG. 5 is a cross-sectional view schematically illustrating optical distortion that occurs in a laminated glass 1000. Note that "optical distortion" is a phenomenon in which scenery viewed through glass distorts. The laminated glass 1000 illustrated in FIG. 5 includes an outer glass plate 1001 and an inner glass plate 1002, and an interlayer 1003 is arranged between the two glass plates (1001 and 1002). The outer glass plate 1001 and the interlayer 1003 are in close contact, the inner glass plate 1002 and the interlayer 1003 are in close contact, and there is hardly any difference in their refractive indices, and therefore refraction of light is not likely to occur and the light advances approximately straight through the interface therebetween. Also, with a single outer glass plate 1001 or a single inner glass plate 1002, irregular recesses and protrusions between the front surface and rear surface correspond to each other, and therefore distortion of an image is suppressed. However, since the outer glass plate 1001 and the inner glass plate 1002 are different glass plates, the recesses and protrusions that occur on the surfaces of the glass plates (1001 and 1002) do not necessarily match and their positions are naturally misaligned. For this reason, as shown in FIG. 5, essentially, the recesses and protrusions of the surface on the vehicle exterior side of the outer glass plate 1001 are misaligned with the recesses and protrusions of the surface on the vehicle interior side of the inner glass plate 1002. Accordingly, the light that enters from the surface on the vehicle exterior side of the outer glass plate 1001 refracts, advances linearly in the interiors of the outer glass plate 1001, the interlayer 1003, and the inner glass plate 1002, and furthermore refracts at the surface on the vehicle interior side of the inner glass plate 1002. Accordingly, the incident light and the transmitted light are not parallel and have different angles. This causes distortion to occur in the image generated by the light that enters via the laminated glass 1000. The distortion of the image that occurs at this time is optical distortion.

If ceramic similar to the conventional ceramic is used, the above-described optical distortion is significant near the blocking layer 5. Note that the thermal expansion rate ratio obtained by "(thermal expansion rate of ceramic) ÷ (thermal expansion rate of glass plates)" is defined according to the materials of the ceramic and the glass plates, and the like. The higher the thermal expansion rate ratio is, the more likely the blocking layer 5 is to expand with respect to the glass plates (2 and 3) and the more likely it is that deformation will occur near the blocking layer 5. From this viewpoint, the thermal expansion rate ratio is preferably a factor of three or less, and is more preferably a factor of two or less. In particular, with the present embodiment, ceramic is layered on the inner glass plate 3, and therefore it is preferable that the thermal expansion rate ratio between the inner glass plate 3 on which the ceramic is layered and the ceramic satisfies such a condition. The same follows also in the case where the ceramic is layered on the outer glass plate 2.

Similarly, deformation is likely to occur near the blocking layer 5 also in the case where the ceramic that forms the blocking layer 5 and the glass plates (2 and 3) have different absorptivities for light in the wavelength range of 1000 nm to 2500 nm. In this case, during bending, a temperature difference tends to occur between the ceramic of the blocking layer 5 and the glass plates (2 and 3), and thus the blocking layer 5 and the glass plates (2 and 3) tend to have different expansion amounts, and deformation tends to occur near the blocking layer 5. In other words, the above-described optical distortion is significant near the blocking layer 5. Note that the light absorptivity can be measured with a spectrophotometer (e.g., UV-3100 manufactured by Shimadzu Corporation), for example. Here, the light absorptivity of the ceramic can change in the process of firing. In the present embodiment, the absorptivity for light in the above-described wavelength range of the fired ceramic (blocking layer 5) differs from that of the glass plates (2 and 3) .

Regarding this point, the inventors of the present document found the following. Specifically, from the viewpoint of the appearance, deep black ceramic with a reflectivity of 5% or less for light in the wavelength range of 1000 nm to 2500 nm (infrared light) has conventionally been used as the ceramic that forms the blocking layer. For this reason, when the glass plate is subjected to bending, the blocking layer has tended to absorb infrared light in the range of 1000 nm to 2500 nm that is emitted in the furnace interior, and has tended to reach high temperatures. In other words, the above-described deformation shown in FIG. 2 has tended to occur in the region near the blocking layer, and thus significant optical distortion has tended to occur.

In view of this, with the present embodiment, in order to avoid this kind of situation and reduce the above-described optical distortion, ceramic that is configured such that the maximum value of reflectivity with respect to light in the wavelength range of 1000 nm to 2500 nm (infrared light) is 15% or more is used as the ceramic that forms the blocking layer 5. The ceramic is preferably configured so as to have a reflectivity of 35% or more with respect to light with a wavelength of 2500 nm (infrared light) . This kind of ceramic can be produced based on the following composition, for example.

Table 1

| | | Ceramic paste |
|---|---|---|
| Pigment *1 | mass% | 10% |
| Resin (cellulose resin) | mass% | 5% |
| Organic solvent (pine oil) | mass% | 15% |
| Glass binder *2 | mass% | 70% |
| Viscosity | dPs | 150 |
| *1: Black 6350 (Pigment Green 17) manufactured by Asahi Kasei Kogyo Co., Ltd. <br> *2: Main components: bismuth borosilicate, zinc borosilicate | | |

As will be described later, it is possible to produce ceramic that has a reflectivity of 35% or more with respect to light with a wavelength of 2500 nm (infrared light) based on the composition shown in Table 1 above. Note that the pigment (Black 6350) in Table 1 above is a complex oxide pigment composed of oxides of iron and chromium, and is an infrared light reflecting pigment with a high infrared light reflectivity. Specifically, the maximum value of the reflectivity of the pigment (Black 6350) is 60% or more with respect to light in the wavelength range of 1000 nm to 2500 nm (infrared light).

It is possible to increase the infrared light reflectivity of the ceramic used to form the blocking layer 5 by using a pigment with a high infrared light reflectivity. In other words, by selecting a pigment with a high reflectivity for light in the wavelength range of 1000 nm to 2500 nm (infrared light) as appropriate, it is possible to produce ceramic in which the maximum value of reflectivity is 15% or more with respect to light in the wavelength range of 1000 nm to 2500 nm (infrared light) as appropriate. Note that other than the above-described Black 6350, Black 6301 manufactured by Asahi Kasei Kogyo Co., Ltd., 42-703A, 42-706A, or 42-707A manufactured by Tokan Material Technology Co., Ltd., or the like can be used as the pigment with the high infrared light reflectivity. Also, a pigment containing iron oxides has a reflectivity that is relatively high with respect to infrared light. For this reason, when the ceramic in which the maximum value of reflectivity with respect to light in the wavelength range of 1000 nm to 2500 nm (infrared light) is 15% or more, it is preferable to employ a pigment that includes iron oxides. Also, the reflectivity for the infrared light of the ceramic can be measured using a spectrophotometer (e.g., UV-3100 manufactured by Shimadzu Corporation). Also, the infrared light reflectivity of the ceramic can change in the process of firing. In the present embodiment, the fired ceramic (blocking layer 5) need only satisfy the above-described reflectivity conditions. Also, if the maximum value of the reflectivity of the ceramic is 15% or more, the ceramic is less likely to melt in the furnace interior when the blocking layer 5 is being formed, and there is a possibility that the blocking layer 5 will be formed in a state in which the blocking property is insufficient. In order to avoid this, it is sufficient to selectively use a glass binder with a low melting point as the material for the blocking layer 5.

Note that if the laminated glass 1 is used as a windshield, the laminated glass 1 is attached to an automobile using adhesive. If ultraviolet light enters this attachment portion, the attachment strength of the adhesive will deteriorate and the durability of the windshield will be reduced. In contrast, the blocking layer 5 can prevent ultraviolet light from entering the vehicle interior. For this reason, it is possible to prevent the durability of the windshield from decreasing. In particular, it is possible to preferably prevent the durability of the windshield from decreasing by configuring the blocking layer 5 such that the transmissivity for light in the ultraviolet range is 0.1% or less.

Stereo camera

Next, the stereo camera 6 will be described. The image capturing apparatuses (61 and 62) of the stereo camera 6 are configured as appropriate using a lens system, an image sensor, and the like so as to be able to capture images of the state of the vehicle exterior. As illustrated in FIG. 3, the image capture apparatuses (61 and 62) of the stereo camera 6 are arranged apart from each other in the left-right direction. For this reason, with the image capture apparatuses (61 and 62), it is possible to acquire multiple images with parallax at the same time.

Also, the multiple images with parallax that were obtained by the image capture apparatuses (61 and 62) are sent to an image processing apparatus 7 as illustrated in FIG. 4. Based on the multiple images acquired by the stereo camera 6, for example, the image processing apparatus 7 analyzes the distance between an object and the automobile in which the image processing apparatus 7 is mounted (hereinafter also referred to as "object distance"), the movement speed of the object, the type of the object, and the like.

The object distance can be estimated through known analysis (computer vision) using parallax that occurs in multiple obtained images. Also, the movement speed of the object can be estimated based on temporal change in the object direction and the speed of the vehicle. Also, the type of the object can be estimated using a known image analysis method such as pattern recognition.

The image processing apparatus 7 is constituted as a computer having a storage unit, a control unit, an input/output unit, and the like so as to perform such image analysis and be able to present the result thereof to a user (driver). This kind of image processing apparatus 7 may be an apparatus designed specifically for the service to be provided, or a general-purpose apparatus such as a PC (Personal Computer) or a tablet terminal.

§2 Manufacturing method

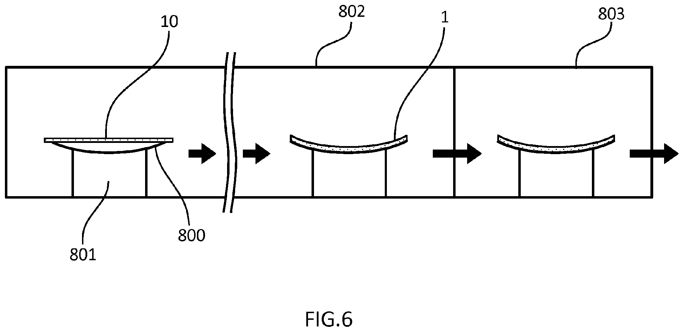

Next, a method for manufacturing the laminated glass 1 according to the present embodiment will be described with reference to FIG. 6. FIG. 6 schematically illustrates a step of molding the laminated glass 1 according to the present embodiment. Note that the method for manufacturing the laminated glass 1 described hereinafter is merely an example, and the steps may be changed within a possible range. Also, steps of the manufacturing process described hereinafter can be omitted, replaced, and added as appropriate according to the embodiment.

First, before the laminated glass 1 is molded using a molding apparatus illustrated in FIG. 6, the flat plate-shaped outer glass plate 2 and inner glass plate 3 are prepared in a preparation step. Also, based on a composition table or the like such as Table 1 above, ceramic in the form of a paste is prepared, which is configured such that the maximum value of reflectivity with respect to light in the wavelength range of 1000 nm to 2500 nm (infrared light) is 15% or more.

Next, the prepared ceramic in the form of a paste is printed (applied) on the peripheral edge portion of the fourth surface 32 of the inner glass plate 3 through screen printing or the like. At this time, two regions in which the ceramic is not printed are provided in the region in which the protruding region 52 is to be formed, in order to form two image capture windows (53 and 54). Also, the printed ceramic in the form of a paste is dried by arranging the laminated glass 1 for about 1 to 5 minutes in a 150°C to 250°C environment.

Next, the flat plate-shaped laminated glass 10 is formed by interposing the interlayer 4 between the prepared outer glass plate 2 and inner glass plate 3, and the formed laminated glass 10 is mounted in a ring-shaped (frame-shaped) mold 800. The mold 800 is arranged on a conveying platform 801, and in a state in which the laminated glass 10 is mounted on the mold 800, the conveying platform 801 passes through a heating furnace 802 and an annealing furnace 803 in sequence.

At this time, the mold 800 is ring-shaped, and therefore the laminated glass 10 passes through the heating furnace 802, which has an internal temperature of about 1000 K, in a state in which only the peripheral edge portion is supported. Then, upon being heated to near the softening point temperature in the heating furnace 802, the inner side of the flat plate-shaped laminated glass 10 curves downward with respect to the peripheral edge portion due to its own weight, and thus is molded into a curved shape. Accordingly, it is possible to manufacture the laminated glass 1 that curves in the direction perpendicular to the surface, as described above.

Note that the manufactured laminated glass 1 is attached as a windshield for a vehicle to a frontward window portion of an automobile at a predetermined angle. At this time, the attachment angle of the laminated glass may be 30 degrees or less with respect to the horizontal direction. Also, after the laminated glass 1 is attached to the automobile, the image capture apparatuses (61 and 62) of the stereo camera 6 are attached at predetermined locations (e.g., the ceiling above the front seats) in the vehicle interior via a bracket (not shown).

Characteristics

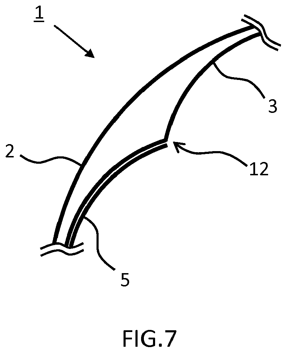

Next, characteristics of the laminated glass 1 constituted as described above will be described with reference to FIG. 7. FIG. 7 schematically illustrates a shape near the blocking layer 5 of the laminated glass 1 according to the present embodiment. In the above-described manufacturing step, when the laminated glass 1 is subjected to bending, the laminated glass 1 is heated by the heating furnace 802, which has an internal temperature of about 1000 K. In the furnace interior of the heating furnace 802, it is assumed that a large amount of light with a wavelength of about 2500 nm (infrared light) undergoes black body radiation, based on Planck's law.

Regarding this, in order to form the blocking layer, ceramic with a reflectivity of 5% or less with respect to light in the wavelength range of 1000 nm to 2500 nm, as in a later-described comparative example, has conventionally been used. For this reason, when the glass plates are heated in the heating furnace, the blocking layer is excessively heated due to the blocking layer absorbing a large amount of light (infrared light) emitted in the furnace interior, and thus it is assumed that significant deformation such as that shown in FIG. 2 above has been likely to occur.

By contrast, with the laminated glass 1 according to the above-described configuration as well, as shown in FIG. 7, the deformed portion 12 that refracts the light that passes through the outer glass plate 2 and the inner glass plate 3 can be formed near the blocking layer 5. Specifically, deformation is likely to occur in the inner glass plate 3 on which the blocking layer 5 is layered, whereby a portion at which the shapes of the outer glass plate 2 and the inner glass plate 3 do not match is likely to form near the blocking layer 5, and this portion can become the deformed portion 12.

However, with the laminated glass 1 according to the above-described configuration, ceramic that is configured such that the maximum value of reflectivity with respect to light in the wavelength range of 1000 nm to 2500 nm is 15% or more is used as the ceramic that forms the blocking layer 5. For this reason, when the laminated glass 1 is heated in the heating furnace 802, it is possible to prevent the blocking layer 5 from absorbing too much of the light (infrared light) emitted in the furnace interior. In other words, in the inner glass plate 3, it is possible to prevent a significant temperature difference from being generated between the region in which the blocking layer 5 is provided and the region in which the blocking layer 5 is not provided, and thus it is possible to suppress a case in which the region in which the blocking layer 5 is provided becomes likely to deform. Also, since it is possible to prevent the blocking layer 5 from reaching a high temperature, even if the thermal expansion rate of the ceramic that forms the blocking layer 5 and the thermal expansion rate of the inner glass plate 3 are different, it is possible to reduce the relative expansion amount of the ceramic with respect to the inner glass plate 3. For these reasons, it is possible to suppress a case in which significant deformation such as that shown in FIG. 2 above occurs near the blocking layer 5. In other words, it is possible to suppress the size of the deformed portion 12 that occurs near the blocking layer 5.

Thus, according to the present embodiment, it is possible to reduce the occurrence of significant deformation near the blocking layer 5, and therefore it is possible to keep the width between the two glass plates (2 and 3) approximately constant near the blocking layer 5. For this reason, it is possible to suppress the occurrence of a region exhibiting a lens effect due to changes in the thickness of the interlayer 4 near the blocking layer 5, and thus it is possible to reduce optical distortion that occurs near the blocking layer 5. Specifically, as indicated by the later-described working examples, it is possible to suppress the distortion rate of the deformed portion 12 to about 27%. Preferably, the distortion rate of the deformed portion 12 can be suppressed to about 18%. Also, the refractive power (lens power) of the deformed portion 12 can be suppressed to 160 mdpt (0.16 dpt) or less. Preferably, the refractive power (lens power) of the deformed portion 12 can be suppressed to 120 mdpt (0.12 dpt) or less. Note that "dpt (dioptre)" (= 1/m) is a unit for the refractive power of a lens, and indicates the inverse of the focal length. Note that the refractive power can change according to the attachment angle of the glass plate. The numerical value range of the above-described refractive power is measured in a state in which the laminated glass 1 is inclined 27 degrees with respect to the horizontal direction.

Also, in the present embodiment, two image capture windows (53 and 54) are provided in the blocking layer 5. The image capture windows (53 and 54) are regions on which no ceramic is layered, and similarly to the description above, the deformed portions that cause significant optical distortion can be formed near the peripheral edges of the image capture windows (53 and 54). For this reason, if the conventional ceramic is used to form the blocking layer 5, there is a possibility that the deformed portions that cause optical distortion that adversely affects image capture performed by the stereo camera 6 will be formed in the regions of the image capture windows (53 and 54). In particular, in the present embodiment, the image capture windows (53 and 54) are formed in hole shapes, and the ceramic surrounds the peripheries of the regions of the image capture windows (53 and 54), which are relatively small. For this reason, when deformation caused by the ceramic occurs from the two end sides in the left-right direction and the vertical direction, there is a possibility that significant deformation will occur in the image capture windows (53 and 54). Since the images captured by the stereo camera 6 are used to measure the distance to the object or the like, when such optical distortion occurs, measurement using the stereo camera 6 cannot be performed accurately, and in the worst case, the measurement is not possible. By contrast, in the present embodiment, by using ceramic with a high infrared light reflectivity as described above in the formation of the blocking layer 5, optical distortion near the blocking layer 5 is reduced. For this reason, according to the present embodiment, it is possible to prevent such a problem from occurring, and it is possible to provide a laminated glass 1 that has image capture windows (53 and 54) that are suitable for image capture performed by a stereo camera 6.

Also, in the present embodiment, the two glass plates (2 and 3) are manufactured through gravity bending. As described above, in the gravity bending method, bending is performed using the weight of the glass, and therefore deformation caused by the blocking layer 5 reaching a high temperature is likely to occur during the heating. For this reason, with the gravity bending method, when the conventional ceramic with a low infrared light reflectivity is used as the ceramic layer 5, significant deformation is likely to occur near the blocking layer 5, and thus significant optical distortion is likely to occur. By contrast, in the present embodiment, by using ceramic with a high infrared light reflectivity as described above in the formation of the blocking layer 5, a case is suppressed in which the blocking layer 5 absorbs the infrared light in the furnace interior and reaches a high temperature. For this reason, according to the present embodiment, even under molding conditions under which optical distortion is likely to occur, such as gravity bending, it is possible to prevent significant optical distortion from occurring near the blocking layer 5.

Also, in the present embodiment, the attachment angle of the laminated glass 1 may be 30 degrees or less with respect to the horizontal direction, and therefore the blocking layer 5 provided on the laminated glass 1 is configured to be likely to enter the field of vision of the driver. Also, if the attachment angle with respect to the horizontal direction is relatively low, the length of the optical path by which the light that is incident from the front passes through the laminated glass increases, and therefore the amount of such optical distortion increases. For this reason, if significant optical distortion occurs near the blocking layer 5, there is a possibility that the field of vision of the driver will constantly be hindered by the optical distortion. By contrast, according to the present embodiment, for the above-described reasons, it is possible to reduce optical distortion near the blocking layer 5. Accordingly, even if the blocking layer enters the field of vision of the driver due to the attachment condition of the laminated glass 1, which is that the attachment angle with respect to the horizontal direction is 30 degrees or less, the driver can smoothly check the scenery in the vehicle exterior up to the vicinity of the blocking layer.

§3 Modified Examples

Although an embodiment of the present invention was described in detail above, the foregoing description is in all respects merely an example of the present invention. It goes without saying that various improvements and modifications can be performed without departing from the scope of the present invention. For example, regarding the constituent components of the laminated glass 1, according to the embodiment, constituent components may be omitted, replaced, and added as appropriate. Also, the shapes and sizes of the constituent components of the above-described laminated glass 1 may be determined as appropriate according to the embodiment. For example, the following modifications are possible. Note that in the following description, constituent elements that are similar to those of the above-described embodiment are denoted by similar reference signs, and description thereof is omitted as appropriate.

3.1

For example, in the above-described embodiment, the blocking layer 5 is layered on the fourth surface 32 of the laminated glass 1. However, the surface on which the blocking layer 5 is layered need not be limited to the fourth surface 32 of the laminated glass 1 and may be the second surface 22 or the third surface 31. Also, for example, in the above-described embodiment, the blocking layer 5 is formed only on one surface. However, the number of surfaces on which the blocking layer 5 is provided is not limited to one, and the blocking layer 5 may be provided on multiple surfaces selected from the second layer 22, the third layer 31, and the fourth layer 32. For example, the blocking layer 5 may be provided on the second surface 22 and the fourth surface 32. Note that if the blocking layer 5 is layered only on one of the second surface 22 and the fourth surface 32, deformation is likely to occur in only the one glass plate on which the blocking layer 5 is layered, and therefore significant deformation is likely to occur near the blocking layer 5. In particular, if the blocking layer 5 is layered only on the fourth surface 32, the space in which the blocking layer 5 is layered is open, and therefore compared to the case in which the blocking layer 5 is layered only on the second surface 22, significant deformation is more likely to occur near the blocking layer 5. By contrast, in the above-described embodiment, ceramic that is configured such that the maximum value of reflectivity is 15% or more with respect to light in the wavelength range of 1000 nm to 2500 nm is used as the ceramic that forms the blocking layer 5, and thereby the occurrence of deformation near the blocking layer 5 is reduced. For this reason, even if the blocking layer 5 is layered only on one of the second surface 22 and the fourth surface 32, it is possible to produce the laminated glass 1 in which optical distortion that occurs near the blocking layer 5 is reduced.

3.2

Also, for example, in the above-described embodiment, the blocking layer 5 has a single-layer structure. However, as long as the blocking layer 5 is configured such that the maximum value of reflectivity is 15% or more with respect to light in the wavelength region of 1000 nm to 2500 nm, the blocking layer 5 need not be limited to this example, and may have a multilayer structure. For example, a first ceramic layer is formed by layering ceramic with the composition shown in Table 1 above on the fourth surface 32 of the inner glass plate 3. Next, a silver layer is formed by layering silver on the first ceramic layer. Furthermore, a second ceramic layer is formed by layering ceramic with the composition shown in Table 1 above on the silver layer. Accordingly, the blocking layer 5 with a three-layer structure can be formed. Note that it is possible to use a material with a configuration shown in Table 2 below as the silver layer.

Table 2

|  |  | Conductive ceramic paste |
|---|---|---|
| Silver particles (average particle diameter: 10μm) | mass% | 70 |
| Glass binder *1 | mass% | 10 |
| Resin (cellulose resin) | mass% | 5 |
| Organic medium (terpineol) | mass% | 15 |
| Viscosity | dPs | 180 |
| *1: Main components: bismuth borosilicate, zinc borosilicate | | |

Note that if the blocking layer 5 is constituted with a multilayer structure in this manner, the outermost layer arranged on the outermost side and the layer in contact with the glass plate (in the present embodiment, the inner glass plate 3) on which the blocking layer 5 is layered preferably satisfy the condition of the reflectivity for infrared light. Due to the layer in contact with the glass plate on which the blocking layer 5 is layered being configured in this manner, during heating for bending, it is possible to prevent a case in which radiant heat from the glass plate side is reflected and only the temperature of the blocking layer 5 rises, and thus it is possible to suppress the amount of relative expansion of the blocking layer 5 with respect to the glass plate. For this reason, it is possible to efficiently prevent the above-described deformation from occurring near the blocking layer 5. Note that if the blocking layer 5 is given a multilayer structure, it is difficult to cause the shapes of the layers to match. For this reason, the shapes of the layers need not match. For example,

3.3

Also, for example, in the above-described embodiment, the image capture windows (53 and 54) are formed into approximate trapezoidal shapes. However, the shapes of the image capture windows (53 and 54) need not be limited to this example, and may be selected as appropriate according to the embodiment. For example, the image capture windows (53 and 54) may be formed into shapes such as rectangles, circles, or ellipses. Note that if the stereo camera 6 is omitted, the image capture windows (53 and 54) may be omitted.

Also, for example, in the above-described embodiment, the image capture windows (53 and 54) are formed into hole shapes and are arranged apart from the non-blocked region 55. In other words, the peripheral edges of the image capture windows (53 and 54) are surrounded by the blocking layer 5 (protruding region 52). However, the positions of the image capture windows (53 and 54) need not be limited to this example, and may be selected as appropriate according to the embodiment. For example, the image capture windows (53 and 54) may be formed so as to be continuous with the non-blocked region 55. In other words, the image capture windows (53 and 54) may be formed into cut-out shapes.

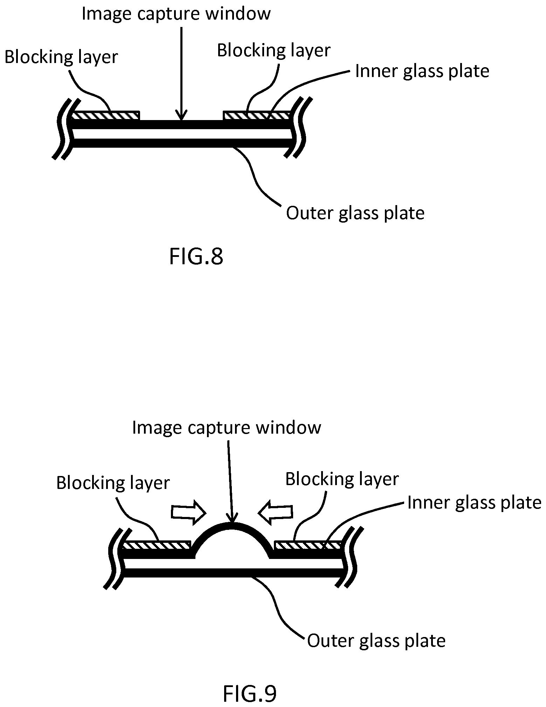

FIGS. 8 and 9 are diagrams for illustrating a problem that can occur when the image capture window is formed into a hole shape. As shown in FIG. 8, if the image capture windows are formed into hole shapes or cut-out shapes, the regions of the image capture windows, which are relatively small, are sandwiched at both end portion sides by the ceramic (blocking layer 5) in at least one direction. In the above-described embodiment, the image capture windows (53 and 54) are sandwiched by the ceramic at both end portion sides in the left-right direction (x axis direction) and the vertical direction (z axis direction) . Also, in the present modified example, the image capture windows (53A and 54A) are sandwiched by the ceramic on both end portion sides in the left-right direction (x axis direction).

In this case, when the blocking layer significantly expands with respect to the inner glass plate during bending, the image capture window receives the stress caused by the expansion of the blocking layer from the two end portion sides, and at this portion, the inner glass plate significantly deforms in a convex shape. For this reason, if the image capture windows are formed in hole shapes or cut-out shapes, there is a possibility that deformation that impedes image capture via the image capture window will occur in the image capture windows. By contrast, in the above-described embodiment and the present modified example, a case in which deformation caused by the blocking layer 5 occurs is suppressed by using the ceramic having the above-described infrared light reflectivity. For this reason, in the above-described embodiment and the present modified example, it is possible to prevent deformation that inhibits image capture from occurring in the image capture windows even if the image capture windows are formed in hole shapes or cut-out shapes in the blocking layer 5.

3.4

Also, for example, in the above-described embodiment, the outer glass plate 2 and the inner glass plate 3 of the laminated glass 1 are manufactured through gravity bending. However, the method for molding the outer glass plate 2 and the inner glass plate 3 into curves need not be limited to the gravity bending method, and may be selected as appropriate according to the embodiment. For example, the outer glass plate 2 and the inner glass plate 3 may be molded into curves with a pressing method.

3.5

Also, the interlayer 4 can employ various modes. For example, a region of the interlayer 4 (dyed region) may be given the blocking function of the blocking layer 5 by dying a portion of the interlayer 4 a dark color such as black. Note that if the dyed region overlaps with the image capture windows (53 and 54), there is a possibility that the dyed region will inhibit image capture performed by the image capture apparatuses (61 and 62). For this reason, regarding portions in which the image capture windows (53 and 54) and the dyed region overlap, it is possible to use a configuration in which the dyed region does not overlap with the image capture windows (53 and 54) due to being replaced with a material having a high visible light transmissivity.

3.6

Also, for example, in the above-described embodiment, the stereo camera 6 is constituted by two image capturing apparatuses (61 and 62). However, the number of image capturing apparatuses that constitute the stereo camera 6 need not be limited to this example, and may be three or more. Also, according to this, the number of image capture windows provided in the blocking layer 5 may be three or more. Furthermore, one image capturing apparatus may be arranged in the vehicle interior instead of the stereo camera 6. In this case, the number of image capture windows provided in the blocking layer 5 may be one.

3.7

Also, for example, in the above-described embodiment, the laminated glass 1 is used as a windshield for an automobile. However, the application of the laminated glass 1 need not be limited to a windshield and may be selected as appropriate according to the embodiment. For example, the laminated glass 1 may be used as a rear glass or a roof, for example. Working Examples

Hereinafter, working examples of the present invention will be described. However, the present invention is not necessarily limited to these working examples.

Test 1: Deformed portion that occurs near the blocking layer

First, a glass plate according to the following comparative example was prepared in order to find the cause of deformation that occurs near the blocking layer.

Comparative example

The conditions for producing the laminated glass according to the comparative example are as follows.

- Sizes of both glass plates: (left-right direction) 1329.6 mm, (vertical direction) 951.0 mm
- Thickness of outer glass plate: 2.0 mm
- Thickness of inner glass plate: 1.6 mm
- Type of both glass plates: green glass
- Molding conditions of both glass plates: depth of bend of center is set to 26.1 mm, maximum depth of bend is set to 26.7 mm, temperature of furnace interior is set to 650°C
- Thickness of interlayer: 0.8 mm (single-layer structure)
- Width of blocking layer: (upper-side portion) 50 mm, (side portions) 25 mm, (lower-side portion) 130 mm
- Position of blocking layer: same as in embodiment
- Thickness of blocking layer: 10 to 20 $\mu$m
- Composition of ceramic that forms blocking layer: pigment 15%, resin (cellulose resin) 5%, organic solvent (pine oil) 15%, glass binder 60%
- Pigment: BLACK 3250 (PIGMENT BLACK 28, manufactured by Asahi Kasei Kogyo Co., Ltd.)

Measurement of shape

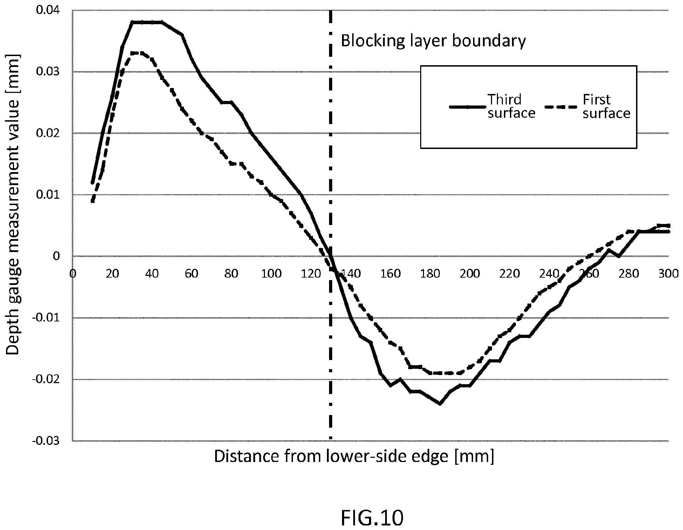

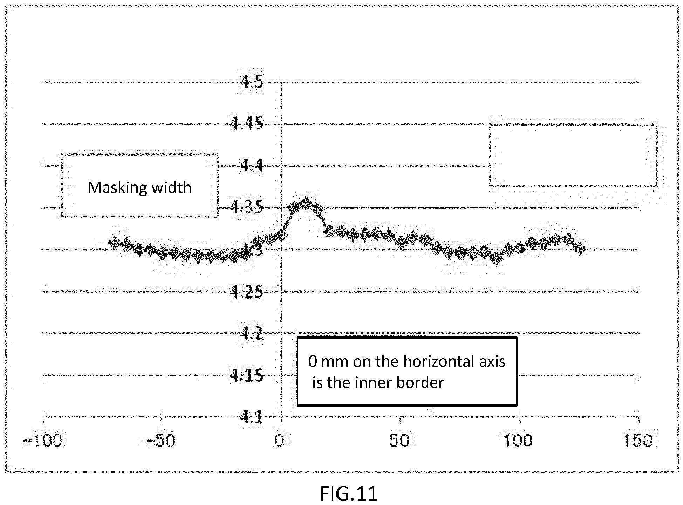

Based on the above-described production conditions, the laminated glass according to the comparative example was produced, and the surface shapes of the first surface of the outer glass plate and the second surface of the inner glass surface of the produced laminated glass were measured using a depth gauge (manufactured by Mitutoyo Corporation; product number: ID-C112RB) upward from the center of the lower-side portion. Also, based on the results of measurement performed with the depth gauge, the outer glass plate and the inner glass plate were overlaid at their end portions, and the total thickness of the laminated glass was measured. The results are shown in FIGS. 10 and 11.

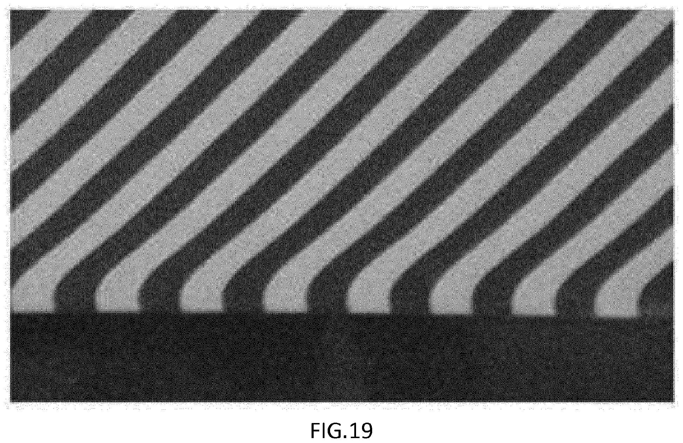

As shown in FIGS. 10 and 11, with the laminated glass according to the comparative example, a shape difference occurred between the inner glass plate and the outer glass plate near the blocking layer. Specifically, as shown in FIG. 10, although an S-shaped deformation occurred in the inner glass plate and the outer glass plate near the blocking layer, a larger deformation than that of the outer glass plate occurred in the inner glass plate on which the blocking layer was layered. Accordingly, as shown in FIG. 11, a portion was formed in which the width between the outer glass plate and the inner glass plate changed in a convex shape. Then, at the portion that changed in the convex shape, as indicated in FIG. 19, which will be described later, significant optical distortion occurred.

In the above-described result, significant deformation occurred in the portion in which the blocking layer was provided, and therefore it was inferred that when the glass plates were subjected to bending, the ceramic forming the blocking layer reached a higher temperature than estimated. Then, according to this, the blocking layer significantly expanded, and it was found that the convex deformation shown in FIG. 11 occurred near the blocking layer.

Test 2: Comparison of optical distortion

Next, in order to find the relationship between the infrared light reflectivity of the ceramic used for the blocking layer and the optical distortion that occurs near the blocking layer, the laminated glass according to working examples 1 and 2 below was prepared in addition to the laminated glass according to the above-described comparative example.

Working example 1

Glass plates according to working example 1 were produced under the same conditions as the above-described comparative example, except for the composition of the ceramic constituting the blocking layer. Ceramic having the composition shown in Table 1 above was used in working example 1.

Working example 2

Glass plates according to working example 2 were produced under the same conditions as the above-described working example 1 and comparative example, except for the composition of the ceramic constituting the blocking layer. The composition of the ceramic used in working example 2 included pigment in an amount of 15%, resin (cellulose resin) in an amount of 8%, organic solvent (pine oil) in an amount of 7%, and a glass binder in an amount of 70%. Also, for the pigment, a mixture containing BLACK 3250 (manufactured by Asahi Kasei Kogyo Co., Ltd.) in an amount of 50% and BLACK 6350 (manufactured by Asahi Kasei Kogyo Co., Ltd.) in an amount of 50% was used.

Working example 3

Glass plates according to working example 3 were produced under the same conditions as in the above-described working example 1, except for the type of the pigment. BLACK 6301 (Asahi Kasei Kogyo Co., Ltd.) was used as the pigment of working example 3.

Working example 4

Glass plates according to working example 4 were produced under the same conditions as the above-described working example 1, except for the type of the pigment. Black 27 (42-701A manufactured by Tokan Material Technology Co., Ltd.) was used as the pigment of working example 4.

Measurement of reflectivity

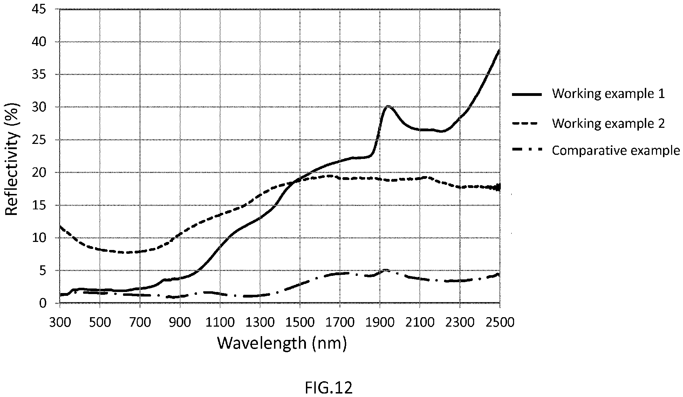

Next, the reflectivities with respect to light of the ceramics used in the working examples (1 and 2) and the comparative example were measured using a spectrophotometer (e.g., UV-3100 manufactured by Shimadzu Corporation). The results of measuring the reflectivities are shown in FIG. 12.

As shown in FIG. 12, the reflectivity with respect to light in the wavelength region of 1000 nm to 2500 nm (infrared light) of the ceramic used in the comparative example was 5% or less. By contrast, the maximum values of the reflectivities with respect to light in the wavelength range of 1000 nm to 2500 nm (infrared light) of the ceramics used in working examples 1 and 2 were 15% or more. In particular, it was found that the ceramic used in working example 1 had a reflectivity of 35% or more with respect to light with a wavelength of 2500 nm (infrared light) . Note that the maximum values of the reflectivities with respect to light in the wavelength region of 1000 nm to 2500 nm (infrared light) of the ceramics used in working examples 3 and 4 were 15% or more.

Measurement of distortion rate

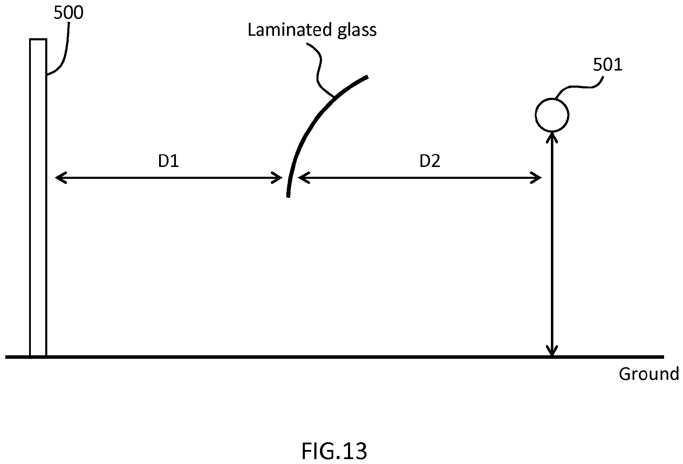

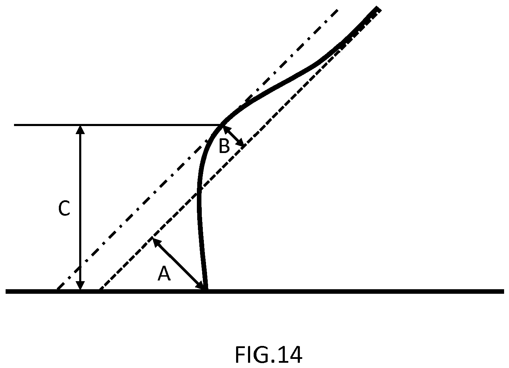

Next, the optical distortion near the blocking layers of working examples 1 to 4 and the comparative example was observed and the distortion rates were measured using the methods shown in FIGS. 13 and 14. In other words, as shown in FIG. 13, a board 500 on which a stripe pattern was formed was photographed through the laminated glasses according to the working examples (1 and 2) and the comparative example, using a camera 501. The camera 501 was arranged at a height of 1480 mm from the ground. Also, the laminated glass was arranged at an angle of 27 degrees from the vertical direction. A distance D1 between the board 500 and the laminated glass was set to 8845 mm and a distance D2 between the camera 501 and the laminated glass was set to 3160 mm. The stripe pattern of the board 500 had a pitch width of 100 mm (the white line widths and black line widths were each 50 mm), and the angle of the stripes was 45 degrees.

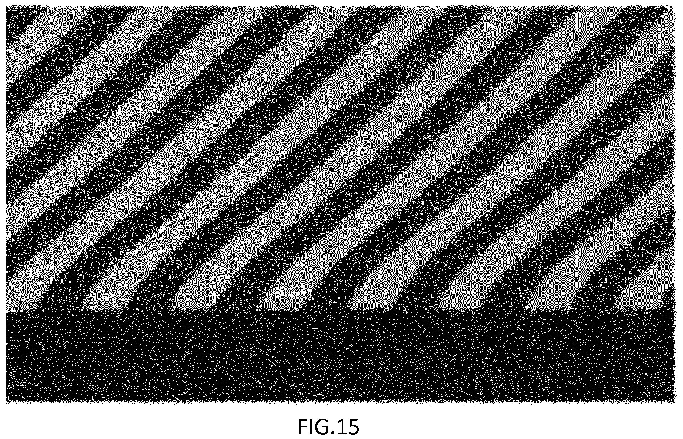

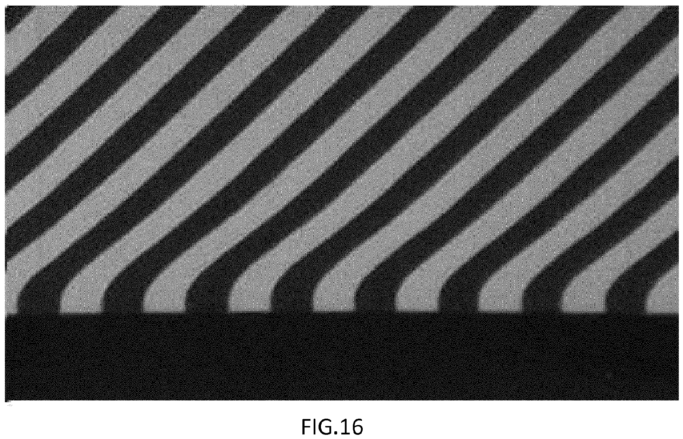

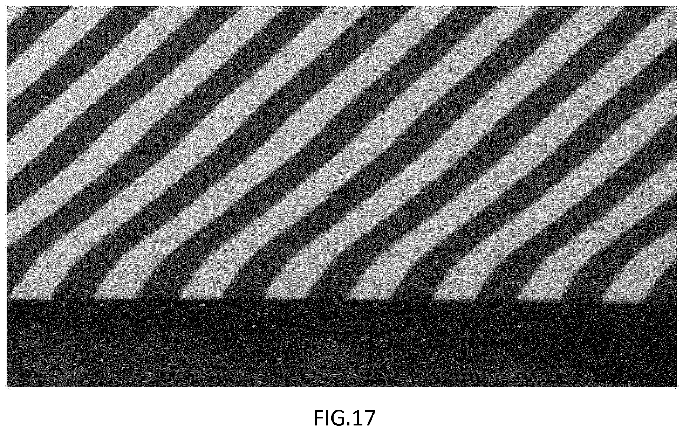

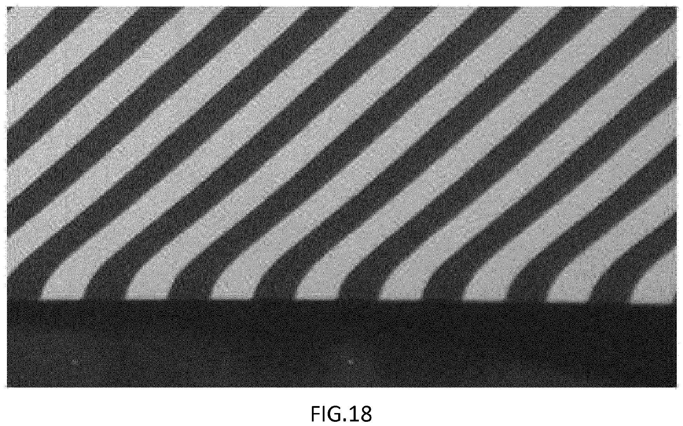

FIGS. 15 to 19 show photographs obtained through image capture of the working examples (1 and 2) and the comparative example. Specifically, FIG. 15 shows a photograph obtained through image capture of the laminated glass according to working example 1. FIG. 16 shows a photograph obtained through image capture of the laminated glass according to working example 2. FIG. 17 shows a photograph obtained through image capture of the laminated glass according to working example 3. FIG. 18 shows a photograph obtained through image capture of the laminated glass according to working example 4. FIG. 19 is a photograph obtained through image capture of the laminated glass according to the comparative example.

Also, as shown in FIG. 14, the lengths of A, B, and C were measured at the center bordering the lower side using the photographs, and the distortion rates were calculated based on the calculations shown in Equation 1 below. As a result, the distortion rate of working example 1 was 12.1%. The distortion rate of working example 2 was 27.0%. The distortion rate of working example 3 was 15%. The distortion rate of working example 4 was 18%. The distortion rate of the comparative example was 29.0%. Note that A indicates the length from the base portion of the stripe pattern to the original stripe pattern. B indicates the shift amount by which the original stripe pattern (dotted line in the drawing) is moved in parallel so as to come into contact with the outer edge of the actual stripe pattern (the distance between the dotted line in the drawing and the one-dot chain line in the drawing) . C indicates the length from the base to the height at which B is measured. A trend is shown in which the smaller the value of the distortion rate is, the less optical distortion

there is.

Equation 1

$$\text{Distortion rate (\%)} = \frac{|B - A|}{C} \times 100$$

Refractive power

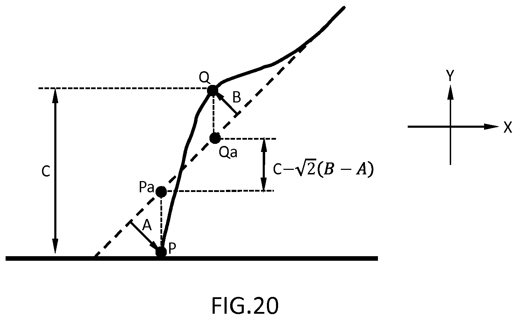

Next, as shown in FIGS. 20 to 24, the relationship between the distortion rate and refractive power was specified via the magnification of the lens, and the refractive powers near the blocking layers of working examples 1 to 4 and the comparative example were calculated based on the above-described distortion rates.

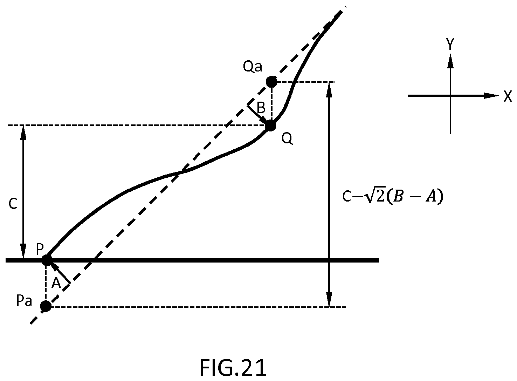

FIGS. 20 and 21 schematically illustrate cases in which distortion occurs in an image of a stripe pattern used to measure the distortion rate due to a deformed portion near the blocking layer, in a state in which the laminated glass is inclined 27 degrees with respect to the horizontal direction. FIG. 20 shows an example of a stripe pattern viewed through a deformed portion. When it is assumed that the image of the stripe pattern extends and contracts in the y direction due to the lens effect of the deformed portion, point P and point Q in the stripe pattern that is viewed via the deformed portion actually exist at point Pa and point Qa respectively, at which lines extending in the y direction from point P and point Q and the stripe pattern intersect. In other words, the interval in the y direction between point Pa and point Qa is extended to the interval in the y direction between point P and point Q due to the distortion caused by the deformed portion. Accordingly, according to this assumption, a magnification m of the deformed portion having the lens effect can be applied through the expression of Equation 2 below (at this time, A is a negative value and B is a positive value). Also, by substituting the expression shown in Equation 1 above into the expression shown in Equation 2 below, a relational equation between distortion rate d and magnification m can be obtained as shown in Equation 3 below.

Equation 2

$$m = \frac{C}{C - \sqrt{2}(B - A)}$$

Equation 3

$$d = \frac{m - 1}{\sqrt{2}m}$$

On the other hand, FIG. 21 shows a case in which distortion with a tendency opposite to that of Fig. 20 occurs when the stripe pattern is viewed through the deformed portion. In this case as well, the relational equation between the distortion rate d and the magnification m can be calculated similarly to that described above. In other words, the magnification m of the deformed portion having the lens effect can be provided using an equation similar to Equation 2 above (note that A is a positive value and B is a negative value). Also, a relational equation between distortion rate d and magnification m can be obtained as shown in Equation 4 below.

Equation 4

$$d = \frac{1 - m}{\sqrt{2}m}$$

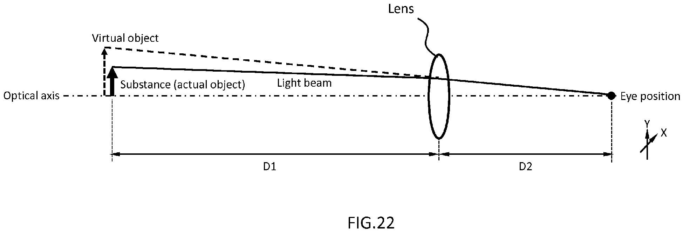

By contrast, FIG. 22 shows a method for calculating the magnification of a lens having a predetermined refractive power. With the method shown in FIG. 22, a lens having a predetermined refractive power is arranged at a position similar to the position at which the laminated glass was arranged in the conditions for observing the distortion rate shown in FIG. 13. Also, an object having a predetermined height (e.g., 100 mm) is arranged at a position at which the board with the stripe pattern was arranged in the conditions for observing the distortion rate.

Next, using the position at which the camera was arranged in the conditions for observing the distortion rate as the pupil position, a light beam that is emitted from the apex of the object is refracted by the lens, and passes through the pupil position is obtained. Then, the light beam that passes through the pupil position is extended straight in the opposite direction (i.e., toward the object) as-is to the position (hereinafter referred to also as "object position") at which the object is arranged, without being refracted by the lens. The height at the object position of the extended line (dotted line in FIG. 22) is the height of the virtual image. By dividing the height of the virtual image by the height of the object, the magnification m of the lens having the predetermined refractive power can be obtained.

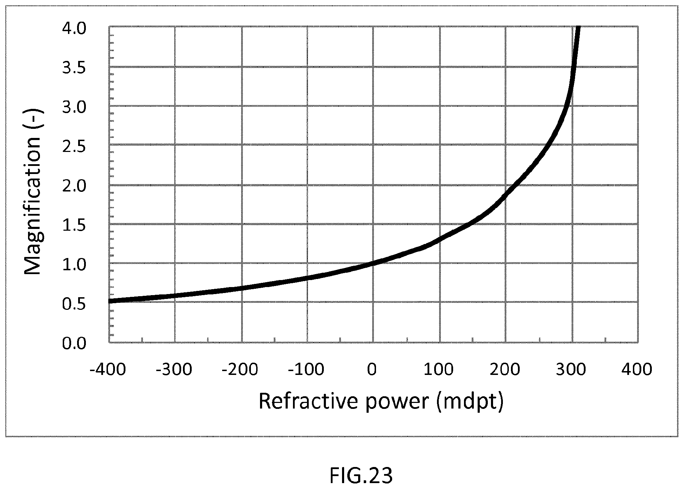

For example, if the height of the object is 100 mm and the height of the virtual object is 160 mm, the magnification m of the lens is 1.60. By repeating this calculation with different refractive powers of the lens, it is possible to obtain the relationship between the refractive power and the magnification m. FIG. 23 is a graph obtained by performing the above-described calculation using optical design software Oslo Premium (6.3.0) manufactured by Lambda Research Corporation and plotting the magnification with respect to the refractive power.

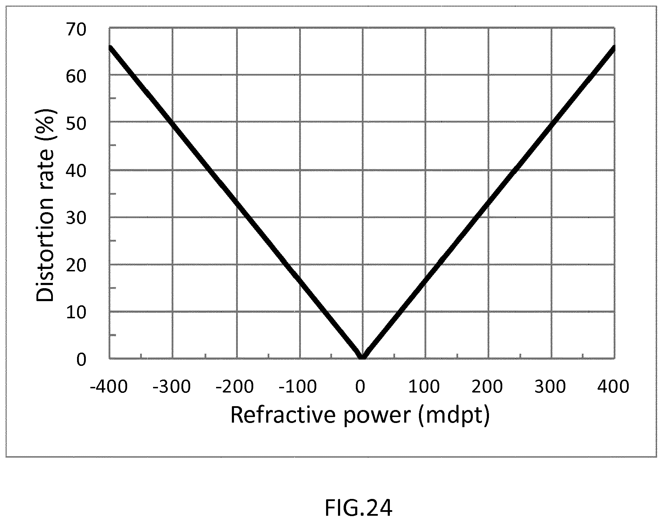

Also, it is possible to derive the relational equation for the refractive power and the distortion rate from the relational equation for the magnification m and the refractive power shown in FIG. 23 and the relational equation for the magnification m and the distortion rate shown in Equations 3 and 4 above. FIG. 24 is a graph showing a relationship between distortion rate and refractive power derived in this manner. According to this graph, it is possible to obtain the refractive power based on the distortion rate and it is possible to obtain the distortion rate based on the refractive power. In view of this, the graph shown in FIG. 24 was used to calculate the refractive powers near the blocking layers in working examples 1 to 4 and the comparative example. As a result, the refractive power of working example 1 was 80 mdpt (0.08 dpt). The refractive power of working example 2 was 160 mdpt (0.16 dpt) . The refractive power of working example 3 was 100 mdpt (0.1 dpt) . The refractive power of working example 4 was 120 mdpt (0.12 dpt). The refractive power of the comparative example was 180 mdpt (0.18 dpt). Note that the refractive powers can be measured as appropriate without relying on the above-described calculation.

Conclusion

Due to the above results, it was found that optical distortion that occurs near a blocking layer can be improved by using ceramic with a high infrared light reflectivity to form the blocking layer. Specifically, it was found that by using ceramic in which the maximum value of reflectivity with respect to light in the wavelength range of 1000 nm to 2500 nm (infrared light) is 15% or more, the distortion rate of the deformed portion that occurs near the blocking layer can be suppressed to about 27%, and the refractive power (lens power) in the state in which the laminated glass is inclined 27 degrees with respect to the horizontal direction can be suppressed to 160 mdpt (0.16 dpt) or less. In particular, in working example 2, in which ceramic in which the maximum value of reflectivity with respect to light in the wavelength range of 1000 nm to 2500 nm (infrared light) is 15% or more is used, the distortion rate was improved by 2% or more compared to the comparative example and the refractive power was improved by 20 mdpt (0.02 dpt) or more.

Also, in working examples 1, 3, and 4, it was found that the distortion rate of the deformed portion that occurs near the blocking layer can preferably be suppressed to about 18%, and the refractive power (lens power) can be suppressed to 120 mdpt (0.12 dpt) or less. In particular, in working example 1, in which ceramic having a reflectivity of 35% or more with respect to light with a wavelength of 2500 nm (infrared light) is used, the distortion rate was improved by 15% or more and the refractive power was improved by 60 mdpt (0.06 dpt) or more compared to the comparative example. Note that the relationship between the distortion rate and sensory evaluation is as shown in Table 3 below.

Table 3

| Distortion rate | Sensory evaluation |
|---|---|
| 0%~10% | Even an expert would not be bothered by the optical distortion |
| 10%~15% | Only an expert would notice that there is optical distortion |
| 15%~25% | Only an expert would be bothered by the optical distortion |
| 25%~30% | Even a novice, when given a description of optical distortion, would notice that there is optical distortion |
| 30% or more | Even a novice who has not been given a description of optical distortion would notice that there is optical distortion |

Here, an "expert" is a person who knows a method for finding optical distortion, such as moving a viewpoint up and down, and a "novice" is a person who does not know such a method for finding optical distortion.

Accordingly, as established by comparing FIGS. 16 and 19, it was found that by using the ceramic of working example 2, the distortion rate near the blocking layer was improved by 2% and the refractive power was reduced by 20 mdpt (0.02 dpt), thereby achieving a reduction of optical distortion to the extent of being noticeable only by an expert. In other words, it was found that by using ceramic in which the maximum value of reflectivity with respect to light in the wavelength range of 1000 nm to 2500 nm (infrared light) is 15% or more to form the blocking layer, optical distortion that occurs near the blocking layer can be reduced to a level that only an expert would notice.

Also, as demonstrated by comparing FIGS. 15 and 19, it was found that by using the ceramic of Working Example 1, the distortion rate near the blocking layer can be improved by 15% or more, and the refractive power can be reduced by 100 mdpt (0.1 dpt) or more, thereby achieving a reduction of optical distortion that even a novice can notice. In other words, it was found that by using ceramic having a reflectivity of 35% or more with respect to light with a wavelength of 2500 nm (infrared light) to form the blocking layer, optical distortion that occurs near the blocking layer can be dramatically reduced.

Reference Signs List

| | |
|---|---|
| 1 | Laminated glass |
| 11 | Peripheral edge portion |
| 12 | Deformed portion |
| 2 | Outer glass plate |
| 21 | First surface |
| 22 | Second surface |
| 3 | Inner glass plate |
| 31 | Third surface |
| 32 | Fourth surface |
| 4 | Interlayer |
| 5 | Blocking layer |
| 51 | Peripheral edge region |
| 52 | Protruding region |
| 53, 54 | Image capture window |
| 55 | Non-blocked region |
| 6 | Stereo camera |
| 61, 62 | Image capturing apparatus |
| 7 | Image processing apparatus |
| 800 | Mold |
| 801 | Conveying platform |
| 802 | Heating furnace |
| 803 | Annealing furnace |
| 500 | Board |
| 501 | Camera |

**Claims**

1. A laminated glass, comprising:

an outer glass plate that includes a first surface and a second surface and that curves such that the first surface is convex and the second surface is concave;
an inner glass plate that includes a third surface and a fourth surface and that curves such that the third surface is convex and the fourth surface is concave;
an interlayer that is arranged between the outer glass plate and the inner glass plate and bonds the second surface of the outer glass plate and the third surface of the inner glass plate together; and
a blocking layer that is made of ceramic and is layered along a peripheral edge portion of at least one of the second surface, the third surface, and the fourth surface,
wherein the ceramic is configured such that the maximum value of reflectivity with respect to light in a wavelength range of 1000 nm to 2500 nm is 15% or more.

# EP 3 395 778 A1

2. The laminated glass according to claim 1,
wherein the ceramic is configured to have a reflectivity of 35% or more with respect to light with a wavelength of 2500 nm.

3. The laminated glass according to claim 1 or 2,
wherein the ceramic contains an infrared light reflecting pigment in which the maximum value of reflectivity with respect to light in a wavelength range of 1000 nm to 2500 nm is 60% or more.

4. The laminated glass according to any one of claims 1 to 3,
wherein the blocking layer includes an image capture window corresponding to an image capturing apparatus, such that the image capturing apparatus can perform image capture through the laminated glass, and
the image capture window is formed into a hole shape or a cut-out shape.

5. The laminated glass according to claim 4,
wherein the blocking layer includes a plurality of the image capture windows, which correspond to a plurality of the image capturing apparatus of a stereo camera, such that the plurality of image capturing apparatuses can perform image capture through the laminated glass.

6. The laminated glass according to any one of claims 1 to 5,
wherein the outer glass plate and the inner glass plate are manufactured through gravity bending.

7. The laminated glass according to any one of claims 1 to 6,
which is used as a windshield for a vehicle with an attachment angle that is 30 degrees or less with respect to a horizontal direction.

8. The laminated glass according to any one of claims 1 to 7,
wherein the outer glass plate and the inner glass plate are transparent, and
the ceramic that forms the blocking layer has a reflectivity for light in the wavelength range of 1000 nm to 2500 nm that is different from that of the outer glass plate and the inner glass plate.

9. The laminated glass according to any one of claims 1 to 8,
wherein the blocking layer is layered only on one of the second surface and the fourth surface.

10. The laminated glass according to any one of claims 1 to 9,
wherein a deformed portion that refracts light passing through the outer glass plate and the inner glass plate is formed near the blocking layer, and
a refractive power of the deformed portion is 160 mdpt or less.

21

900

903 —

903

901

902

FIG.1

900

903

903

904

904

901

902

FIG.2

FIG.3

Vehicle exterior side

Vehicle interior side

11
5
1
52
Image data
21
22
2
52
32
53(54)
55
61(62)
3
7
31
z
4
11
51
y
x

FIG.4

FIG.5

FIG.6

FIG.7

Image capture window

Blocking layer          Blocking layer

Inner glass plate

Outer glass plate

FIG.8

Image capture window

Blocking layer          Blocking layer

Inner glass plate

Outer glass plate

FIG.9

FIG.10

FIG.11

FIG.12

500

Laminated glass

501

D1

D2

Ground

FIG.13

FIG.14

FIG.15

FIG.16

FIG.17

FIG.18

FIG.19

FIG.20

FIG.21

Lens

Virtual object

Substance (actual object)     Light beam

Optical axis

Eye position

D1

D2

Y
X

FIG.22

FIG.23

FIG.24

## INTERNATIONAL SEARCH REPORT

| International application No. |
| --- |
| PCT/JP2016/087893 |

| A. CLASSIFICATION OF SUBJECT MATTER |
| --- |
| C03C27/12(2006.01)i, B60J1/00(2006.01)i |

According to International Patent Classification (IPC) or to both national classification and IPC

| B. FIELDS SEARCHED |
| --- |

Minimum documentation searched (classification system followed by classification symbols)
C03C27/12, B60J1/00

Documentation searched other than minimum documentation to the extent that such documents are included in the fields searched

| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)
DWPI(Thomson Innovation)

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 03-079426 A (Monsanto Co.), 04 April 1991 (04.04.1991), the entire specification & US 4943140 A & EP 410952 A2 & AU 5985390 A & CA 2022062 A | 1-10 |
| A | WO 2015/186839 A1 (Nippon Sheet Glass Co., Ltd.), 10 December 2015 (10.12.2015), the entire description (Family: none) | 1-10 |
| A | JP 2012-144217 A (Asahi Glass Co., Ltd.), 02 August 2012 (02.08.2012), the entire specification & US 2013/0301118 A1 & WO 2012/096305 A1 & CN 103298634 A | 1-10 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 03 February 2017 (03.02.17) | 14 February 2017 (14.02.17) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

| International application No. |
|---|
| PCT/JP2016/087893 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2014-097595 A (Toray Industries, Inc.), 29 May 2014 (29.05.2014), the entire specification (Family: none) | 1-10 |
| A | JP 55-24300 Y2 (Nippon Sheet Glass Co., Ltd.), 10 June 1980 (10.06.1980), the entire specification (Family: none) | 1-10 |
| A | JP 02-177601 A (Asahi Glass Co., Ltd.), 10 July 1990 (10.07.1990), the entire specification & US 5132161 A & EP 358090 A1 & DE 68917549 T2 & KR 10-1996-0016366 B | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015024929 A